# EUROPEAN PATENT APPLICATION

(11) **EP 4 332 419 A1**
(43) Date of publication of application: **06.03.2024**
(21) Application number: 22795886.5
(22) Date of filing: 28.04.2022
(51) Int. Cl.: F16L 15/04

(54) **SCREW JOINT-EQUIPPED OIL WELL PIPE, METHOD FOR PRODUCING OIL WELL PIPE CONNECTING BODY WHICH USES SCREW JOINT-EQUIPPED OIL WELL PIPE, AND METHOD FOR PRODUCING SCREW JOINT-EQUIPPED OIL WELL PIPE**

(30) Priority: 30.04.2021 JP 2021077773
(71) Applicant: NIPPON STEEL CORPORATION, Chiyoda-ku Tokyo 100-8071 (JP); Vallourec Oil and Gas France, 59620 Aulnoye-Aymeries (FR)
(72) Inventor: NAKAI, Yuya, Tokyo 100-8071 (JP); KURANISHI, Takao, Tokyo 100-8071 (JP); NAKAMURA, Keiichi, Tokyo 100-8071 (JP); BENIYA, Yuki, Tokyo 100-8071 (JP); MITSUNARI, Hideki, Tokyo 100-8071 (JP)
(74) Representative: J A Kemp LLP
(86) International application number: PCT/JP2022/019271
(87) International publication number: WO 2022/230973

(57) **Abstract**

This invention provides an oil well steel pipe with a threaded connection with which excellent galling resistance is obtained without using a compound grease, and which can suppress the occurrence of rust on a pin contact surface and can also keep shouldering torque at a low level. An oil well steel pipe with a threaded connection of the present disclosure includes a pipe main body 10 including a first end portion 10A and a second end portion 10B. The pipe main body 10 includes a pin 40 formed at the first end portion 10A, and a box 50 formed at the second end portion 10B. A light oil 80 is applied to a pin contact surface 400 of the pin 40. A solid lubricant coating 60 is formed on a box contact surface 500 of the box 50.

## Description

### TECHNICAL FIELD

The present disclosure relates to an oil well steel pipe with a threaded connection, a method for producing oil well steel pipes connected body using an oil well steel pipe with a threaded connection, and a method for producing an oil well steel pipe with a threaded connection.

### BACKGROUND ART

An oil well steel pipe with a threaded connection is used for drilling in oil fields and natural gas fields (hereinafter, an oil field and a natural gas field are collectively referred to as "oil well"). Specifically, at the oil well drilling site, in accordance with the depth of the oil well, a plurality of oil well steel pipes with a threaded connection are connected to form oil well steel pipes connected body. The oil well steel pipes connected body is formed by fastening oil well steel pipes with a threaded connection to each other. The oil well steel pipes connected body is lifted up and loosened for the purpose of inspection and the like, and after being inspected, the oil well steel pipes connected body is refastened and reused.

An oil well steel pipe with a threaded connection includes a pin and a box. The pin has a pin contact surface including an external thread part on an outer peripheral surface of an end portion of the oil well steel pipe with a threaded connection. The box has a box contact surface including an internal thread part on an inner peripheral surface of an end portion of the oil well steel pipe with a threaded connection.

The pin contact surface and the box contact surface repeatedly experience strong friction during fastening and loosening of the oil well steel pipe with a threaded connection. Unless there is sufficient durability with respect to friction at these regions, galling (uncorrectable seizure) will occur during repeated fastening and loosening. Therefore, an oil well steel pipe with a threaded connection is required to have sufficient durability with respect to friction, that is, to have excellent galling resistance.

Conventionally, compound greases that contain heavy metal powder, which are referred to as "dopes", have been used to improve the galling resistance. Application of a compound grease to the pin contact surface and/or the box contact surface can improve the galling resistance of an oil well steel pipe with a threaded connection. However, heavy metal powders contained in compound greases, such as Pb, Zn, and Cu, may affect the environment.

Further, when fastening (thread fastening) is performed, much of the compound grease that was applied to the pin contact surface and/or box contact surface is discharged from the front end portions of the pin and the box when completing the fastening (thread fastening). Some of the compound grease is discharged onto the inner surface of the oil well steel pipes from the front end portions of the pins. If the compound grease which was discharged onto the inner surface of the oil well steel pipes accumulates on the inner surface of the oil well steel pipes, it may be the cause of clogging of the fastened oil well steel pipes (oil well steel pipes connected body). For these reasons, the development of an oil well steel pipe with a threaded connection that is excellent in galling resistance without the use of a compound grease is desired.

In a threaded connection for pipes proposed in International Application Publication No. 2009/072486 (Patent Literature 1), a solid lubricant coating is formed on a box contact surface, and a solid anti-rust coating (solid anticorrosive coating) composed of a UV curable resin is formed on a pin contact surface. It is described in Patent Literature 1 that by means of the solid lubricant coating, the occurrence of galling can be suppressed even when fastening and loosening are repeated. In addition, because the solid anti-rust coating is hard, even in a case where a pin having the solid anti-rust coating is fastened to a box having the solid lubricant coating, the solid anti-rust coating does not affect galling resistance.

### CITATION LIST

### PATENT LITERATURE

Patent Literature 1: International Application Publication No. 2009/072486

### SUMMARY OF INVENTION

### TECHNICAL PROBLEM

In this connection, when performing fastening (thread fastening), the torque during fastening rapidly increases when interference between threads starts. The torque that is applied when threads interfere with each other is called "shouldering torque". If the shouldering torque during fastening is low, a force to be applied for rotation during the fastening operation can be kept low, and fastening can be smoothly performed.

Further, after oil well steel pipes with a threaded connection are produced at a production mill, the oil well steel pipes with a threaded connection are not transported directly to an oil well drilling site, and instead are transported to a local yard that is a transit point and are temporarily stored at the local yard. The oil well steel pipes with a threaded connection that are stored at the local yard are then transported from the local yard to the oil well drilling site according to the demand for oil well steel pipes with a threaded connection at the oil well drilling site. The oil well steel pipes with a threaded connection are stored at the local yard for a long time period of about six months to two years until being transported to the oil well drilling site from the local yard. Further, the oil well steel pipes with a threaded connection that were transported to the oil well drilling site are not used immediately after being transported, and are stored at the oil well drilling site for a short time period of about one week to one month until being used. In many cases the oil well steel pipes with a threaded connection are stored outdoors at the oil well drilling site. If rust occurs on the pin contact surface while the oil well steel pipes with a threaded connection are being stored, the rust can affect the adhesiveness during fastening. Therefore, it is preferable that the occurrence of rust on the pin contact surface of an oil well steel pipe with a threaded connection can be suppressed at least during a storage period at an oil well drilling site.

According to Patent Literature 1, a solid anti-rust coating composed of a UV curable resin is formed on the pin contact surface of an oil well steel pipe with a threaded connection, and the occurrence of rust on the pin contact surface can be suppressed by the solid anti-rust coating. In this connection, as mentioned above, after oil well steel pipes with a threaded connection are shipped from the production mill, the oil well steel pipes are transported to an oil well drilling site by way of a local yard. While being transported from the production mill to the local yard, while being transported within the local yard, and while being transported from the local yard to the oil well drilling site, in some cases the pin of an oil well steel pipe with a threaded connection comes in contact with another oil well steel pipe or the like and the solid anti-rust coating is partially damaged. In a case where the solid anti-rust coating is damaged at the local yard or the oil well drilling site, it is difficult to repair the damaged solid anti-rust coating. In the case of repairing the solid anti-rust coating, it is necessary to prepare a composition for forming a UV curable resin, and an ultraviolet irradiation apparatus for curing the composition is also required. Accordingly, in order to repair a solid anti-rust coating that was damaged, it is necessary to install an ultraviolet irradiation apparatus at the local yard and/or the oil well drilling site. In addition, in order to repair the solid anti-rust coating, it is necessary to remove all of the damaged solid anti-rust coating, and thereafter form the solid anti-rust coating once again. In this case, the repair work load is also large. Therefore, in a case where a part of the solid anti-rust coating was damaged or peeled off due to some cause or other, it is preferable if the solid anti-rust coating can be easily repaired. Hereinafter, in the present description, being easily repairable is referred to as "excellent in repairability".

An objective of the present disclosure is to provide an oil well steel pipe with a threaded connection with which excellent galling resistance is obtained without using a compound grease, which can suppress the occurrence of rust on a pin contact surface and can keep shouldering torque during fastening at a low level, and which is excellent in repairability.

Another objective of the present disclosure is to provide a method for producing oil well steel pipes connected body that, even when stored outdoors at a local yard and an oil well drilling site, is capable of suppressing the occurrence of rust on a pin contact surface, and with which, while suppressing the impact on the environment caused by use of an oil well steel pipe with a threaded connection, excellent galling resistance is obtained and shouldering torque during fastening can be kept at a low level, and which is excellent in repairability.

### SOLUTION TO PROBLEM

An oil well steel pipe with a threaded connection according to the present disclosure is an oil well steel pipe with a threaded connection that is fastenable to another oil well steel pipe with a threaded connection, which includes:
a pipe main body including a first end portion and a second end portion,
wherein:
   the pipe main body includes:
   a pin formed at the first end portion, wherein, during fastening, the pin is inserted into a box of the other oil well steel pipe with a threaded connection and is fastened to the box of the other oil well steel pipe with a threaded connection, and
a box formed at the second end portion, wherein, during the fastening, a pin of the other oil well steel pipe with a threaded connection is inserted into the box, and the box is fastened to the pin of the other oil well steel pipe with a threaded connection;
the pin includes:
   a pin contact surface which at least has an external thread part formed on an outer peripheral surface of the first end portion of the pipe main body and which, during the fastening, contacts the box of the other oil well steel pipe with a threaded connection;
   a light oil is applied to the pin contact surface; and
   the box includes:
      a box contact surface which at least has an internal thread part formed on an inner peripheral surface of the second end portion of the pipe main body and which, during the fastening, contacts the pin contact surface of the pin of the other oil well steel pipe with a threaded connection, and
      a solid lubricant coating formed on or over the box contact surface.

An oil well steel pipe with a threaded connection according to the present disclosure is an oil well steel pipe with a threaded connection, includes:
a pipe main body including a first end portion and a second end portion,
wherein:
   the pipe main body includes:
   a pin formed at the first end portion, and
   a box formed at the second end portion;
   the pin includes:
      a pin contact surface which at least has an external thread part formed on an outer peripheral surface of the first end portion of the pipe main body;
      an anti-rust grease is applied to the pin contact surface; and
      the box includes:
         a box contact surface which at least has an internal thread part formed on an inner peripheral surface of the second end portion of the pipe main body, and
         a solid lubricant coating formed on or over the box contact surface.

A method for producing oil well steel pipes connected body according to the present disclosure is a method for producing oil well steel pipes connected body in which a plurality of oil well steel pipes with a threaded connection are fastened together, including:
an oil well steel pipe preparation process of preparing an oil well steel pipe with a threaded connection;
wherein:
   the oil well steel pipe with a threaded connection includes:
   a pipe main body including a first end portion and a second end portion;
   the pipe main body includes:
      a pin formed at the first end portion, and
      a box formed at the second end portion;
      the pin includes:
         a pin contact surface which at least has an external thread part formed on an outer peripheral surface of the first end portion of the pipe main body;
         an anti-rust grease is applied to the pin contact surface; and
         the box includes:
            a box contact surface which at least has an internal thread part formed on an inner peripheral surface of the second end portion of the pipe main body, and
            a solid lubricant coating formed on or over the box contact surface;
            the method for producing oil well steel pipes connected body further including:
               a process of transporting the oil well steel pipe with a threaded connection to a local yard that is a place for temporarily storing the oil well steel pipe with a threaded connection,
               a process of temporarily storing the oil well steel pipe with a threaded connection transported to the local yard, at the local yard,
               a process of, before delivering the oil well steel pipe with a threaded connection that is temporarily stored at the local yard to an oil well drilling site at which the oil well steel pipes connected body is to be formed, removing the anti-rust grease applied to the pin contact surface of the oil well steel pipe with a threaded connection, and applying a light oil to the pin contact surface from which the anti-rust grease is removed,
               a process of delivering the oil well steel pipe with a threaded connection having the light oil applied to the pin contact surface to the oil well drilling site, and
               a process of, at the oil well drilling site, fastening the oil well steel pipe with a threaded connection having the light oil applied to the pin contact surface to another oil well steel pipe with a threaded connection to form oil well steel pipes connected body.

A method for producing an oil well steel pipe with a threaded connection according to the present disclosure is a method that includes:
a process of temporarily storing, at a local yard, an oil well steel pipe with a threaded connection transported to the local yard,
wherein:
   the oil well steel pipe with a threaded connection includes:
   a pipe main body including a first end portion and a second end portion;
   the pipe main body includes:
      a pin formed at the first end portion, and
      a box formed at the second end portion;
      the pin includes:
         a pin contact surface which at least has an external thread part formed on an outer peripheral surface of the first end portion of the pipe main body;
         an anti-rust grease is applied to the pin contact surface; and
         the box includes:
            a box contact surface which at least has an internal thread part formed on an inner peripheral surface of the second end portion of the pipe main body, and
            a solid lubricant coating formed on or over the box contact surface;
            the method for producing an oil well steel pipe with a threaded connection further including:
               a process of, before delivering the oil well steel pipe with a threaded connection that is temporarily stored at the local yard to an oil well drilling site at which an oil well steel pipes connected body is to be formed, removing the anti-rust grease applied to the pin contact surface of the oil well steel pipe with a threaded connection, and applying a light oil to the pin contact surface from which the anti-rust grease is removed.

### ADVANTAGEOUS EFFECTS OF INVENTION

An oil well steel pipe with a threaded connection according to the present disclosure obtains excellent galling resistance without using a compound grease, can suppress the occurrence of rust on a pin contact surface, can keep shouldering torque during fastening to a low level, and is excellent in repairability.

A method for producing oil well steel pipes connected body according to the present disclosure is a method for producing oil well steel pipes connected body which, even when stored outdoors at a local yard and an oil well drilling site, is capable of suppressing the occurrence of rust on a pin contact surface, and with which, while suppressing the impact on the environment caused by use of oil well steel pipes with a threaded connection, excellent galling resistance is obtained and shouldering torque during fastening can be kept at a low level, and which is excellent in repairability.

### BRIEF DESCRIPTION OF DRAWINGS

[FIG. 1] FIG. 1 is a graph (torque chart) illustrating the relation between the number of turns of an oil well steel pipe with a threaded connection and torque when an oil well steel pipe with a threaded connection is fastened.
[FIG. 2] FIG. 2 is a view illustrating results of torque measurement tests conducted in an example, using an oil well steel pipe with a threaded connection having a solid lubricant coating formed on a box contact surface and a light oil applied to a pin contact surface (Test Numbers 1 and 2), and a conventional oil well steel pipe with a threaded connection having a solid lubricant coating formed on a box contact surface and a solid anti-rust coating formed on a pin contact surface (Test Number 3).
[FIG. 3] FIG. 3 is a configuration diagram illustrating one example of an oil well steel pipe with a threaded connection 1 of the present embodiment.
[FIG. 4] FIG. 4 is a partial cross-sectional view illustrating a cross section (longitudinal cross section) along the longitudinal direction of a coupling of the oil well steel pipe with a threaded connection illustrated in FIG. 3.
[FIG. 5] FIG. 5 is a cross-sectional view parallel to the longitudinal direction of the oil well steel pipe with a threaded connection illustrated in FIG. 4, that illustrates a portion in the vicinity of a pin of the oil well steel pipe with a threaded connection.
[FIG. 6] FIG. 6 is a cross-sectional view parallel to the longitudinal direction of the oil well steel pipe with a threaded connection illustrated in FIG. 4, that illustrates a portion in the vicinity of a box of the oil well steel pipe with a threaded connection.
[FIG. 7] FIG. 7 is a view illustrating an example of an oil well steel pipe with a threaded connection in which the pin includes an external thread part but does not include a pin sealing surface and a pin shoulder surface, and the box includes an internal thread part but does not include a box sealing surface and a box shoulder surface.
[FIG. 8] FIG. 8 is a partial cross-sectional view of an integral type oil well steel pipe with a threaded connection according to the present embodiment.
[FIG. 9] FIG. 9 is a cross-sectional view parallel to the longitudinal direction of the oil well steel pipe with a threaded connection illustrated in FIG. 4, that illustrates a portion in the vicinity of the box of the oil well steel pipe with a threaded connection.
[FIG. 10] FIG. 10 is a view illustrating an example of the configuration of the box of the oil well steel pipe with a threaded connection of the present embodiment.
[FIG. 11] FIG. 11 is a cross-sectional view parallel to the longitudinal direction of the oil well steel pipe with a threaded connection illustrated in FIG. 4, that illustrates a portion in the vicinity of the pin of the oil well steel pipe with a threaded connection.
[FIG. 12] FIG. 12 is a view illustrating an example of the configuration of the pin of the oil well steel pipe with a threaded connection of the present embodiment.
[FIG. 13] FIG. 13 is a view that schematically illustrates the locations for performing each process of a method for producing oil well steel pipes connected body of the present embodiment.
[FIG. 14] FIG. 14 is a configuration diagram illustrating an example of an oil well steel pipe with a threaded connection.
[FIG. 15] FIG. 15 is a configuration diagram illustrating an example of an oil well steel pipe with a threaded connection that is different from the example in FIG. 14.
[FIG. 16] FIG. 16 is a longitudinal section of a portion in the vicinity of a pin contact surface illustrated in FIG. 14 and FIG. 15.
[FIG. 17] FIG. 17 is a longitudinal section of a portion in the vicinity of the pin contact surface illustrated in FIG. 14 and FIG. 15, that is different from the example in FIG. 16.
[FIG. 18] FIG. 18 is a configuration diagram illustrating a state in which a protector for a pin is mounted on a pin.
[FIG. 19] FIG. 19 is a longitudinal section of a portion in the vicinity of an internal thread part of a protector for a pin and an external thread part, in a state in which the protector for a pin is mounted on a pin.
[FIG. 20] FIG. 20 is a torque chart created using results of torque measurement tests conducted in an example.

### DESCRIPTION OF EMBODIMENTS

The present embodiment will be described in detail below with reference to the accompanying drawings. The same reference symbols will be used throughout the drawings to refer to the same or like parts, and description thereof will not be repeated.

The present inventors conducted various studies regarding an oil well steel pipe with a threaded connection with which excellent galling resistance is obtained without using a compound grease, and which can suppress the occurrence of rust on a pin contact surface and can also keep shouldering torque at a low level. As a result, the present inventors obtained the following findings.

### [Regarding shouldering torque]

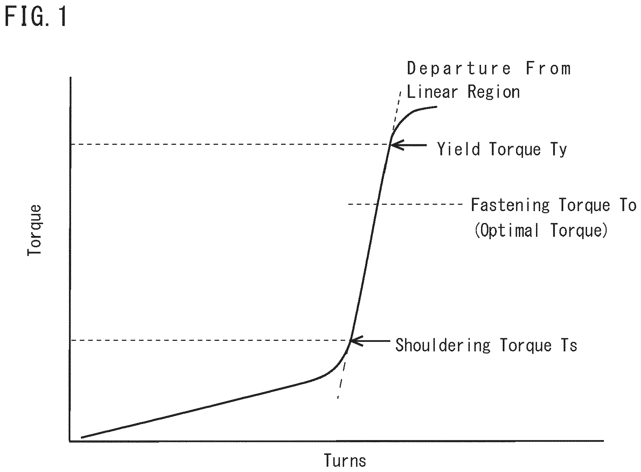

When fastening oil well steel pipes with a threaded connection to each other, the optimal torque to end the fastening is determined in advance. FIG. 1 is a graph (torque chart) illustrating the relation between the number of turns of an oil well steel pipe with a threaded connection and the torque, when oil well steel pipes with a threaded connection are fastened. Referring to FIG. 1, when oil well steel pipes with a threaded connection are fastened, initially the torque increases moderately in proportion to the number of turns. As fastening continues, the shoulder surfaces come in contact with each other. The torque at such time is referred to as "shouldering torque Ts". After the shouldering torque Ts is reached, when fastening is continued, the torque rapidly increases in proportion to the number of turns. The recommended torque (fastening torque To) when fastening threaded connections is set within a predetermined range that is higher than the shouldering torque Ts. The fastening is completed at a time point at which the torque reaches the fastening torque To. At the fastening torque To, a pin sealing surface and a box sealing surface interfere with each other with an appropriate interfacial pressure. In this case, the gastightness of oil well steel pipes connected body that is formed by fastening together a plurality of the oil well steel pipes with a threaded connection is high.

Note that, depending on the configuration of the pin and the box, there are also cases in which an oil well steel pipe with a threaded connection does not include a shoulder surface. Even in such a case, if oil well steel pipes with a threaded connection are fastened, the torque rapidly increases when threads engage in accordance with rotation for fastening. For example, there are cases where an oil well steel pipe with a threaded connection that has thread parts which are wedge threads does not include shoulder surfaces. In the case of fastening such kind of oil well steel pipes with a wedge thread connection, the torque rapidly increases at the timing at which flanks of the thread parts contact each other. In other words, the torque chart for an oil well steel pipe with a threaded connection in which thread parts are wedge threads and which does not have shoulder surfaces is the same as illustrated in FIG. 1. The torque at a time that torque rapidly increases during fastening of oil well steel pipes with a threaded connection in which the thread parts are wedge threads is referred to as "locked flank torque", and not "shouldering torque". However, in the present description, locked flank torque during fastening of oil well steel pipes with a threaded connection in which the thread parts are wedge threads is also referred to as "shouldering torque".

Note that, when it is particularly desired to avoid loosening of a threaded connection after fastening, the fastening torque To is set to a high value. However, if the fastening torque To is too high, in some cases a portion of the pin and/or the box yields, and plastic deformation occurs. The torque at such time is referred to as "yield torque Ty". Note that, when the yield torque Ty is high, the fastening torque To can be set to a high value.

The present inventors firstly conducted studies with respect to an oil well steel pipe with a threaded connection with which shouldering torque is kept at a low level. As a result, the present inventors obtained the following findings.

The present inventors did not form a conventional solid anti-rust coating on the pin contact surface, and instead applied a light oil onto the pin contact surface. The light oil is a liquid before being applied on the pin contact surface. The light oil is, for example, a light oil with the trade name "WD-40". The light oil contains, for example, a mineral spirit in an amount of 50 to 70 mass%, and a petroleum-based oil in an amount of 25 mass% or less.

A solid lubricant coating was formed on the box contact surface, and a light oil was applied onto the pin contact surface instead of forming a solid anti-rust coating thereon. In this case, the shouldering torque Ts can be kept to a low value during thread fastening of the oil well steel pipe with a threaded connection.

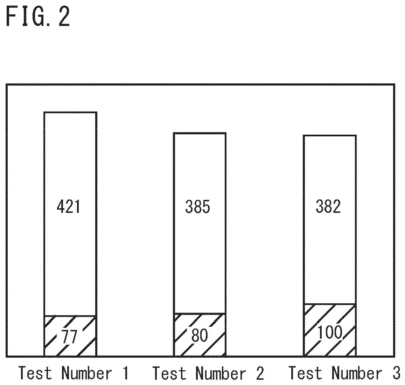

FIG. 2 is a view showing the results of torque measurement tests that were conducted in an example to be described later, using an oil well steel pipe with a threaded connection having a solid lubricant coating formed on a box contact surface and a light oil applied onto a pin contact surface (Test Numbers 1 and 2), and a conventional oil well steel pipe with a threaded connection having a solid lubricant coating formed on a box contact surface and a solid anti-rust coating formed on a pin contact surface (Test Number 3). In FIG. 2, the shouldering torque of Test Number 3 is taken as 100, and the shouldering torque Ts and the yield torque Ty of each test number are shown. In the bar graphs for each test number in FIG. 2, the top end of a hatched portion indicates the shouldering torque Ts, and the top end of an outline portion indicates the yield torque Ty.

Referring to FIG. 2, in each oil well steel pipe with a threaded connection having a solid lubricant coating formed on a box contact surface and a light oil applied onto a pin contact surface (Test Numbers 1 and 2), the shouldering torque Ts is suppressed to a low value in comparison to the conventional oil well steel pipe with a threaded connection having a solid lubricant coating formed on a box contact surface and a solid anti-rust coating formed on a pin contact surface (Test Number 3). Note that, the yield torque Ty of Test Numbers 1 and 2 did not change significantly compared to the yield torque Ty of Test Number 3.

In addition, in the case of an oil well steel pipe with a threaded connection including a pin contact surface onto which the aforementioned light oil has been applied, the occurrence of rust on the pin contact surface can be suppressed even if the oil well steel pipe with a threaded connection is left outdoors for about one month. Accordingly, in the case of an oil well steel pipe with a threaded connection in which a light oil has been applied onto a pin contact surface, after being delivered from a local yard to an oil well drilling site, the oil well steel pipe with a threaded connection exhibits excellent corrosion resistance when temporarily stored for a period (about one week to one month) until being used at the oil well drilling site.

However, the storage period at the local yard that is a transit point is a long time period of about six months to two years. Therefore, in the case of storing an oil well steel pipe with a threaded connection for a long time period at a local yard, an additional measure to suppress the occurrence of rust is required.

Therefore, according to a method for producing oil well steel pipes connected body of the present embodiment, in a local yard, oil well steel pipes with a threaded connection in which an anti-rust grease has been applied to a pin contact surface are stored. The anti-rust grease is in a grease state. That is, the anti-rust grease is in a semi-solid state or a paste state, and is different from the light oil that is a liquid. The anti-rust grease, for example, is an anti-rust composition having high viscosity in a grease state, such as a product with the trade name "RUST VETO AS EU" or a product with the trade name "KENDEX", and is also referred to as "storage dope".

An anti-rust grease can suppress the occurrence of rust on a pin contact surface even when the oil well steel pipe with a threaded connection is stored outdoors for a period of two years. When the oil well steel pipe with a threaded connection is to be delivered from the local yard to an oil well drilling site, at the local yard, the anti-rust grease that was applied to the pin contact surface of the oil well steel pipe with a threaded connection is removed, and a light oil is applied to the pin contact surface from which the anti-rust grease was removed. The oil well steel pipe with a threaded connection having the light oil applied on the pin contact surface is then delivered to the oil well drilling site. In this case, as mentioned above, the pin contact surface on which the light oil has been applied exhibits excellent corrosion resistance if the storage period is about one month. In addition, at the time of use (time of fastening), shouldering torque can be kept to a low level in comparison to an oil well steel pipe with a threaded connection in which a solid anti-rust coating is formed. The viscosity of the light oil that is a liquid is lower than the viscosity of the anti-rust grease. Therefore, even in a case where the light oil is discharged from the pin contact surface to the inner surface of the oil well steel pipe due to fastening, it is difficult for the light oil to accumulate on the inner surface and it is therefore difficult for clogging to occur inside the oil well steel pipe (oil well steel pipes connected body) after fastening.

In addition, unlike a solid anti-rust coating, the light oil is a liquid and can therefore be easily applied to the pin contact surface. Therefore, even if a case arises in which, at the time of delivery at the oil well drilling site, some of the light oil applied to the pin contact surface comes off from the pin contact surface due to contact with another oil well steel pipe with a threaded connection or the like, the problem can be easily repaired by applying light oil to the relevant place on the pin contact surface. In other words, a pin contact surface to which light oil has been applied is more excellent in repairability than a pin contact surface on which a solid anti-rust coating has been formed.

An oil well steel pipe with a threaded connection, a method for producing an oil well steel pipe with a threaded connection, and a method for producing oil well steel pipes connected body which have been completed based on the above findings, are as described in the following.

[1] An oil well steel pipe with a threaded connection that is fastenable to another oil well steel pipe with a threaded connection, including:
   a pipe main body including a first end portion and a second end portion,
   wherein:
      the pipe main body includes:
      a pin formed at the first end portion, wherein, during fastening, the pin is inserted into a box of the other oil well steel pipe with a threaded connection and is fastened to the box of the other oil well steel pipe with a threaded connection, and
      a box formed at the second end portion, wherein, during the fastening, a pin of the other oil well steel pipe with a threaded connection is inserted into the box, and the box is fastened to the pin of the other oil well steel pipe with a threaded connection;
      the pin includes:
         a pin contact surface which at least has an external thread part formed on an outer peripheral surface of the first end portion of the pipe main body and which, during the fastening, contacts the box of the other oil well steel pipe with a threaded connection;
         a light oil is applied to the pin contact surface; and
         the box includes:
            a box contact surface which at least has an internal thread part formed on an inner peripheral surface of the second end portion of the pipe main body and which, during the fastening, contacts the pin contact surface of the pin of the other oil well steel pipe with a threaded connection, and
            a solid lubricant coating formed on the box contact surface.
[2] The oil well steel pipe with a threaded connection according to [1], wherein:
   the pin contact surface further includes:
   a pin sealing surface that is formed further on a front end side than the external thread part on the outer peripheral surface of the first end portion, and
   a pin shoulder surface provided at a front end of the first end portion; and
   the box contact surface further includes:
      a box sealing surface that is formed further on a front end side than the internal thread part on the inner peripheral surface of the first end portion, and
      a box shoulder surface provided at a front end of the second end portion.
[3] The oil well steel pipe with a threaded connection according to [1] or [2], wherein:
   the pin further includes:
   a chemical treatment coating formed on the pin contact surface; and
   the light oil is applied to the chemical treatment coating.
[4] The oil well steel pipe with a threaded connection according to [3], wherein:
   in a chemical composition of the oil well steel pipe with a threaded connection, a content of Cr is, in mass%, 2.0% or less.
[5] The oil well steel pipe with a threaded connection according to any one of [1] to [4], wherein:
   the box further includes:
   a plating coating formed on the box contact surface; and
   the solid lubricant coating is formed on the plating coating.
[6] An oil well steel pipe with a threaded connection, including:
   a pipe main body including a first end portion and a second end portion,
   wherein:
      the pipe main body includes:
      a pin formed at the first end portion, and
      a box formed at the second end portion;
      the pin includes:
         a pin contact surface which at least has an external thread part formed on an outer peripheral surface of the first end portion of the pipe main body;
         an anti-rust grease is applied to the pin contact surface; and
         the box includes:
            a box contact surface which at least has an internal thread part formed on an inner peripheral surface of the second end portion of the pipe main body, and
            a solid lubricant coating formed on the box contact surface.
[7] The oil well steel pipe with a threaded connection according to [6], wherein:
   the pin contact surface further includes:
   a pin sealing surface that is formed further on a front end side than the external thread part on the outer peripheral surface of the first end portion, and
   a pin shoulder surface provided at a front end of the first end portion; and
   the box contact surface further includes:
      a box sealing surface that is formed further on a front end side than the internal thread part on the inner peripheral surface of the first end portion, and
      a box shoulder surface provided at a front end of the second end portion.
[8] The oil well steel pipe with a threaded connection according to [6] or [7], wherein:
   the pin further includes:
   a chemical treatment coating formed on the pin contact surface; and
   the anti-rust grease is applied to the chemical treatment coating.
[9] The oil well steel pipe with a threaded connection according to [8], wherein:
   in a chemical composition of the oil well steel pipe with a threaded connection, a content of Cr is, in mass%, 2.0% or less.
[10] The oil well steel pipe with a threaded connection according to any one of [6] to [9], wherein:
   the box further includes:
   a plating coating formed on the box contact surface; and
   the solid lubricant coating is formed on the plating coating.
[11] The oil well steel pipe with a threaded connection according to any one of [6] to [10], further including:
   a protector that is capped over and fastened to the pin;
   wherein:
      the protector includes:
      a tubular part in which an internal thread is formed on an inner peripheral surface, and
      a cap part disposed at one end of the tubular part;
      a distance D1 between a thread ridge of the external thread of the pin and a thread root of the internal thread of the tubular part of the protector is longer than a distance D2 between a thread root of the external thread of the pin and a thread ridge of the internal thread of the tubular part of the protector; and
      a thickness T1 of the anti-rust grease between the thread ridge of the external thread of the pin and the thread root of the internal thread of the tubular part of the protector is thicker than a thickness T2 of the anti-rust grease between the thread root of the external thread of the pin and the thread ridge of the internal thread of the tubular part of the protector.
[12] A method for producing oil well steel pipes connected body in which a plurality of oil well steel pipes with a threaded connection are fastened together, including:
   an oil well steel pipe preparation process of preparing an oil well steel pipe with a threaded connection;
   wherein:
      the oil well steel pipe with a threaded connection includes:
      a pipe main body including a first end portion and a second end portion;
      the pipe main body includes:
         a pin formed at the first end portion, and
         a box formed at the second end portion;
         the pin includes:
            a pin contact surface which at least has an external thread part formed on an outer peripheral surface of the first end portion of the pipe main body;
            an anti-rust grease is applied to the pin contact surface; and
            the box includes:
               a box contact surface which at least has an internal thread part formed on an inner peripheral surface of the second end portion of the pipe main body, and
               a solid lubricant coating formed on the box contact surface;
               the method for producing oil well steel pipes connected body further including:
                  a process of transporting the oil well steel pipe with a threaded connection to a local yard that is a place for temporarily storing the oil well steel pipe with a threaded connection,
                  a process of temporarily storing the oil well steel pipe with a threaded connection transported to the local yard, at the local yard,
                  a process of, before delivering the oil well steel pipe with a threaded connection that is temporarily stored at the local yard to an oil well drilling site at which the oil well steel pipes connected body is to be formed, removing the anti-rust grease applied to the pin contact surface of the oil well steel pipe with a threaded connection, and applying a light oil to the pin contact surface from which the anti-rust grease is removed,
               a process of delivering the oil well steel pipe with a threaded connection having the light oil applied to the pin contact surface to the oil well drilling site, and
               a process of, at the oil well drilling site, fastening the oil well steel pipe with a threaded connection having the light oil applied to the pin contact surface to another oil well steel pipe with a threaded connection to form oil well steel pipes connected body.
[13] A method for producing an oil well steel pipe with a threaded connection, including:
   a process of temporarily storing, at a local yard, an oil well steel pipe with a threaded connection transported to the local yard,
   wherein:
      the oil well steel pipe with a threaded connection includes:
      a pipe main body including a first end portion and a second end portion;
      the pipe main body includes:
         a pin formed at the first end portion, and
         a box formed at the second end portion;
         the pin includes:
            a pin contact surface which at least has an external thread part formed on an outer peripheral surface of the first end portion of the pipe main body;
            an anti-rust grease is applied to the pin contact surface; and
            the box includes:
               a box contact surface which at least has an internal thread part formed on an inner peripheral surface of the second end portion of the pipe main body, and
               a solid lubricant coating formed on the box contact surface;
               the method for producing an oil well steel pipe with a threaded connection further including:
                  a process of, before delivering the oil well steel pipe with a threaded connection that is temporarily stored at the local yard to an oil well drilling site at which an oil well steel pipes connected body is to be formed, removing the anti-rust grease applied to the pin contact surface of the oil well steel pipe with a threaded connection, and applying a light oil to the pin contact surface from which the anti-rust grease is removed.

Hereunder, the oil well steel pipe with a threaded connection, the method for producing oil well steel pipes connected body using oil well steel pipe with a threaded connection, and the method for producing an oil well steel pipe with a threaded connection of the present embodiment are described in detail.

### [Structure of oil well steel pipe with a threaded connection 1]

### [Case where oil well steel pipe with a threaded connection 1 is T&C type]

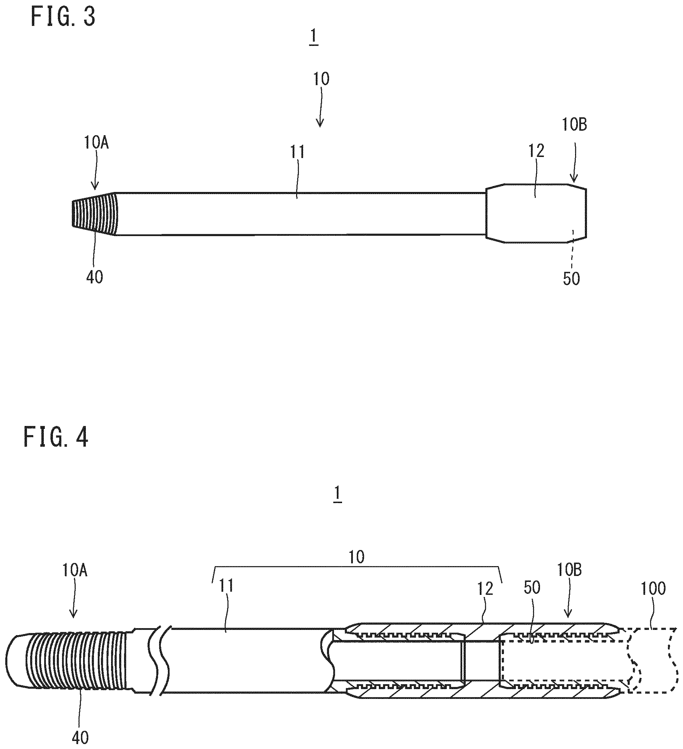

FIG. 3 is a configuration diagram illustrating one example of an oil well steel pipe with a threaded connection 1 of the present embodiment. FIG. 3 is a configuration diagram illustrating an oil well steel pipe with a threaded connection of a so-called T&C (threaded and coupled) type. Referring to FIG. 3, the oil well steel pipe with a threaded connection 1 includes a pipe main body 10.

The pipe main body 10 extends in the longitudinal direction, and a cross section perpendicular to the longitudinal direction thereof is a circular shape. The pipe main body 10 includes a first end portion 10A and a second end portion 10B. The first end portion 10A is an end portion on the opposite side to the second end portion 10B. In the T&C type oil well steel pipe with a threaded connection 1 illustrated in FIG. 3, the pipe main body 10 includes a pin tube body 11 and a coupling 12. The coupling 12 is attached to one end of the pin tube body 11. More specifically, the coupling 12 is fastened by threading to one end of the pin tube body 11.

FIG. 4 is a partial cross-sectional view illustrating a cross section (longitudinal cross section) along the longitudinal direction of the coupling 12 of the oil well steel pipe with a threaded connection 1 illustrated in FIG. 3. Referring to FIG. 3 and FIG. 4, the pipe main body 10 includes a pin 40 and a box 50. The pin 40 is formed at the first end portion 10A of the pipe main body 10. When performing fastening, the pin 40 is inserted into the box 50 of another oil well steel pipe with a threaded connection (not illustrated), and is fastened by threading to the box 50 of the other oil well steel pipe with a threaded connection.

The box 50 is formed at the second end portion 10B of the pipe main body 10. When performing fastening, the pin 40 of another oil well steel pipe with a threaded connection 100 is inserted into the box 50, and the box 50 is fastened by threading to the pin 40 of the other oil well steel pipe with a threaded connection 100.

### [Regarding structure of pin 40]

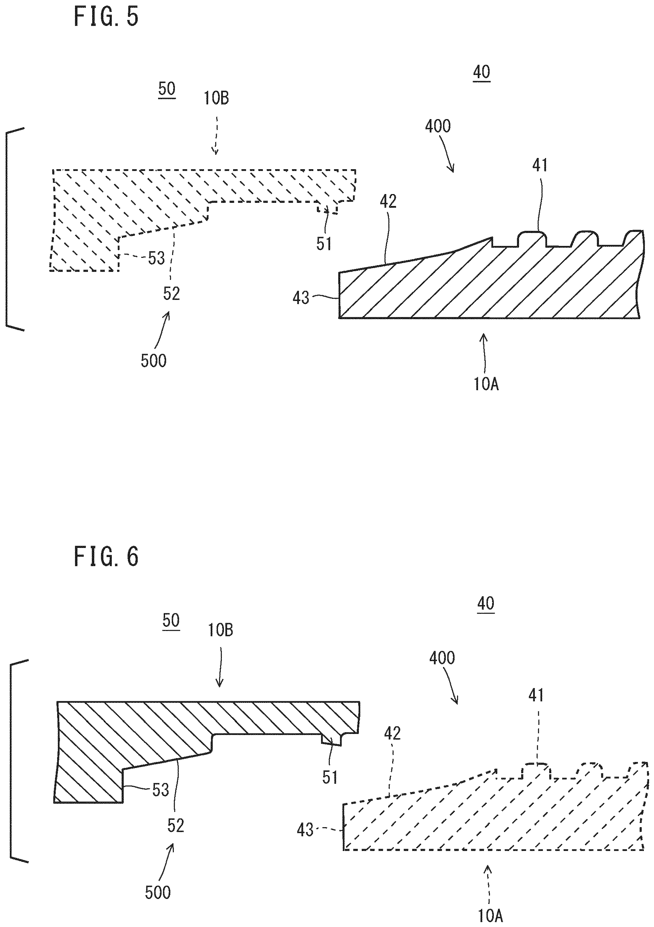

FIG. 5 is a cross-sectional view of a portion in the vicinity of the pin 40 of the oil well steel pipe with a threaded connection 1 illustrated in FIG. 4, which is a cross-sectional view parallel to the longitudinal direction of the oil well steel pipe with a threaded connection 1. A dashed line portion in FIG. 5 represents the structure of the box 50 of another oil well steel pipe with a threaded connection in the case of fastening the oil well steel pipe with a threaded connection 1 to another oil well steel pipe with a threaded connection 1. Referring to FIG. 5, the pin 40 includes a pin contact surface 400 on the outer peripheral surface of the first end portion 10A of the pipe main body 10. The pin contact surface 400 contacts the box 50 of the other oil well steel pipe with a threaded connection when performing fastening to the other oil well steel pipe with a threaded connection.

The pin contact surface 400 includes at least an external thread part 41 formed on the outer peripheral surface of the first end portion 10A. The pin contact surface 400 may further include a pin sealing surface 42 and a pin shoulder surface 43. In FIG. 5, on the outer peripheral surface of the first end portion 10A, the pin sealing surface 42 is disposed further on the front end side of the first end portion 10A than the external thread part 41. In other words, the pin sealing surface 42 is disposed between the external thread part 41 and the pin shoulder surface 43. The pin sealing surface 42 is provided in a tapered shape. Specifically, the outer diameter of the pin sealing surface 42 gradually decreases from the external thread part 41 toward the pin shoulder surface 43 in the longitudinal direction of the first end portion 10A.

When performing fastening with another oil well steel pipe with a threaded connection, the pin sealing surface 42 contacts a box sealing surface 52 (described later) of the box 50 of the other oil well steel pipe with a threaded connection. More specifically, during fastening, when the pin 40 is inserted into the box 50 of the other oil well steel pipe with a threaded connection, the pin sealing surface 42 contacts the box sealing surface 52. Subsequently, when the pin 40 is screwed further into the box 50 of the other oil well steel pipe with a threaded connection, the pin sealing surface 42 closely contacts the box sealing surface 52. By this means, during fastening, the pin sealing surface 42 closely contacts the box sealing surface 52 to thereby form a seal that is based on metal-to-metal contact. Therefore, the gastightness can be increased in the oil well steel pipes with a threaded connection 1 that are fastened to each other.

In FIG. 5, the pin shoulder surface 43 is disposed at the front end face of the first end portion 10A. In other words, in the pin 40 illustrated in FIG. 5, the external thread part 41, the pin sealing surface 42 and the pin shoulder surface 43 are disposed sequentially in that order from the center of the pipe main body 10 toward the first end portion 10A. During fastening to the other oil well steel pipe with a threaded connection, the pin shoulder surface 43 opposes and contacts a box shoulder surface 53 (described later) of the box 50 of the other oil well steel pipe with a threaded connection. More specifically, during fastening, the pin shoulder surface 43 contacts the box shoulder surface 53 as a result of the pin 40 being inserted into the box 50 of the other oil well steel pipe with a threaded connection. By this means, during fastening, a high fastening torque can be obtained. Further, the positional relation between the pin 40 and the box 50 in the fastening state can be stabilized.

Note that, the pin contact surface 400 of the pin 40 includes at least the external thread part 41. In other words, the pin contact surface 400 includes the external thread part 41, and need not include the pin sealing surface 42 and the pin shoulder surface 43. The pin contact surface 400 may include the external thread part 41 and the pin shoulder surface 43, and need not include the pin sealing surface 42. The pin contact surface 400 may include the external thread part 41 and the pin sealing surface 42, and need not include the pin shoulder surface 43.

### [Regarding structure of box 50]

FIG. 6 is a cross-sectional view of a portion in the vicinity of the box 50 of the oil well steel pipe with a threaded connection 1 illustrated in FIG. 4, which is a cross-sectional view parallel to the longitudinal direction of the oil well steel pipe with a threaded connection 1. A dashed line portion in FIG. 6 represents the structure of the pin 40 of another oil well steel pipe with a threaded connection in the case of fastening the oil well steel pipe with a threaded connection 1 to another oil well steel pipe with a threaded connection. Referring to FIG. 6, the box 50 includes a box contact surface 500 on the inner peripheral surface of the second end portion 10B of the pipe main body 10. When performing fastening to another oil well steel pipe with a threaded connection, the box contact surface 500 contacts the pin contact surface 400 of the pin 40 of the other oil well steel pipe with a threaded connection when the pin 40 is screwed into the box 50.

The box contact surface 500 includes at least an internal thread part 51 formed on the inner peripheral surface of the second end portion 10B. When performing fastening, the internal thread part 51 engages with the external thread part 41 of the pin 40 of the other oil well steel pipe with a threaded connection.

The box contact surface 500 may further include the box sealing surface 52 and the box shoulder surface 53. In FIG. 6, on the inner peripheral surface of the second end portion 10B, the box sealing surface 52 is disposed further on the center side of the pipe main body 10 than the internal thread part 51. In other words, the box sealing surface 52 is disposed between the internal thread part 51 and the box shoulder surface 53. The box sealing surface 52 is provided in a tapered shape. Specifically, the inner diameter of the box sealing surface 52 gradually decreases from the internal thread part 51 toward the box shoulder surface 53 in the longitudinal direction of the second end portion 10B.

When performing fastening to another oil well steel pipe with a threaded connection, the box sealing surface 52 contacts the pin sealing surface 42 of the pin 40 of the other oil well steel pipe with a threaded connection. More specifically, during fastening, when the pin 40 of the other oil well steel pipe with a threaded connection is screwed into the box 50, the box sealing surface 52 contacts the pin sealing surface 42, and when the pin 40 is screwed in further, the box sealing surface 52 closely contacts the pin sealing surface 42. By this means, during fastening, the box sealing surface 52 closely contacts the pin sealing surface 42 to thereby form a seal that is based on metal-to-metal contact. Therefore, the gastightness can be increased in the oil well steel pipes with a threaded connection 1 that are fastened to each other.

The box shoulder surface 53 is disposed further on the center side of the pipe main body 10 than the box sealing surface 52. In other words, in the box 50, the box shoulder surface 53, the box sealing surface 52 and the internal thread part 51 are disposed sequentially in that order from the center of the pipe main body 10 toward the second end portion 10B. The normal line of the box shoulder surface 53 is in the longitudinal direction of the pipe main body 10. When performing fastening to another oil well steel pipe with a threaded connection, the box shoulder surface 53 opposes and contacts the pin shoulder surface 43 of the pin 40 of the other oil well steel pipe with a threaded connection. More specifically, during fastening, the box shoulder surface 53 contacts the pin shoulder surface 43 as a result of the pin 40 of the other oil well steel pipe with a threaded connection being inserted into the box 50. By this means, during fastening, a high fastening torque can be obtained. Further, the positional relation between the pin 40 and the box 50 in the fastening state can be stabilized.

The box contact surface 500 includes at least the internal thread part 51. When performing fastening, the internal thread part 51 of the box contact surface 500 of the box 50 contacts the external thread part 41 of the pin contact surface 400 of the pin 40 in a manner such that the internal thread part 51 corresponds with the external thread part 41. The box sealing surface 52 contacts the pin sealing surface 42 in a manner such that the box sealing surface 52 corresponds with the pin sealing surface 42. The box shoulder surface 53 contacts the pin shoulder surface 43 in a manner such that the box shoulder surface 53 corresponds with the pin shoulder surface 43.

In a case where the pin contact surface 400 includes the external thread part 41 and does not include the pin sealing surface 42 and the pin shoulder surface 43, the box contact surface 500 includes the internal thread part 51 and does not include the box sealing surface 52 and the box shoulder surface 53. In a case where the pin contact surface 400 includes the external thread part 41 and the pin shoulder surface 43 and does not include the pin sealing surface 42, the box contact surface 500 includes the internal thread part 51 and the box shoulder surface 53 and does not include the box sealing surface 52. In a case where the pin contact surface 400 includes the external thread part 41 and the pin sealing surface 42 and does not include the pin shoulder surface 43, the box contact surface 500 includes the internal thread part 51 and the box sealing surface 52 and does not include the box shoulder surface 53.

The pin contact surface 400 may include a plurality of the external thread parts 41, may include a plurality of the pin sealing surfaces 42, and may include a plurality of the pin shoulder surfaces 43. For example, the pin shoulder surface 43, the pin sealing surface 42, the external thread part 41, the pin sealing surface 42, the pin shoulder surface 43, the pin sealing surface 42 and the external thread part 41 may be disposed in that order on the pin contact surface 400 of the pin 40 in the direction from the front end of the first end portion 10A toward the center of the pipe main body 10. In such case, the internal thread part 51, the box sealing surface 52, the box shoulder surface 53, the box sealing surface 52, the internal thread part 51, the box sealing surface 52 and the box shoulder surface 53 are disposed in that order on the box contact surface 500 of the box 50 in the direction from the front end of the second end portion 10B toward the center of the pipe main body 10.

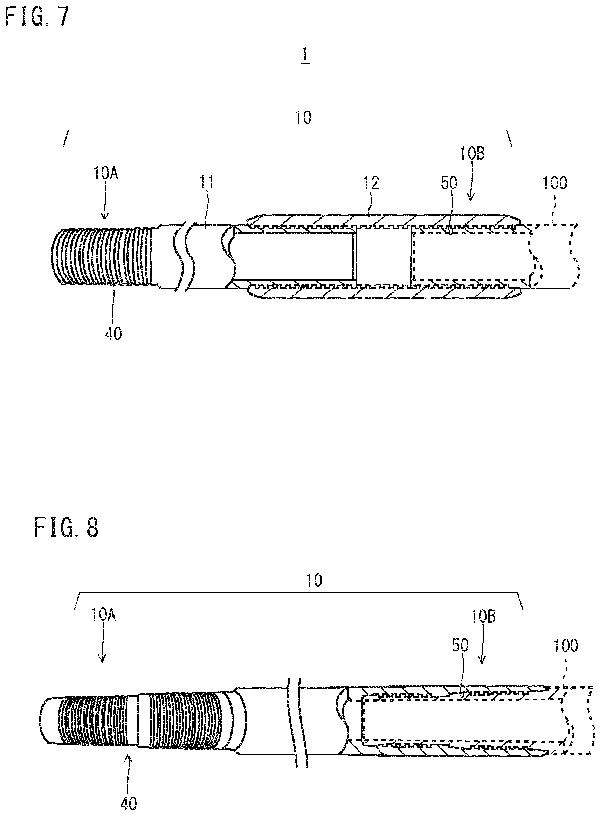

In FIG. 5 and FIG. 6 a so-called "premium j oint" is illustrated in which the pin 40 includes the external thread part 41, the pin sealing surface 42 and the pin shoulder surface 43, and the box 50 includes the internal thread part 51, the box sealing surface 52 and the box shoulder surface 53. However, as described above, the pin 40 may include the external thread part 41 and need not include the pin sealing surface 42 and the pin shoulder surface 43. In this case, the box 50 includes the internal thread part 51 and does not include the box sealing surface 52 and the box shoulder surface 53. FIG. 7 is a view illustrating one example of the oil well steel pipe with a threaded connection 1 in which the pin 40 includes the external thread part 41 and does not include the pin sealing surface 42 and the pin shoulder surface 43, and the box 50 includes the internal thread part 51 and does not include the box sealing surface 52 and the box shoulder surface 53.

### [Case where oil well steel pipe with a threaded connection 1 is integral type]

The oil well steel pipe with a threaded connection 1 illustrated in FIG. 3 and FIG. 4 is a so-called "T&C type" oil well steel pipe with a threaded connection 1, in which the pipe main body 10 includes the pin tube body 11 and the coupling 12. However, the oil well steel pipe with a threaded connection 1 according to the present embodiment may be an integral type instead of a T&C type.

FIG. 8 is a partial cross-sectional view of an integral type oil well steel pipe with a threaded connection 1 according to the present embodiment. Referring to FIG. 8, the integral type oil well steel pipe with a threaded connection 1 includes a pipe main body 10. The pipe main body 10 includes a first end portion 10A and a second end portion 10B. The first end portion 10A is disposed on the opposite side to the second end portion 10B. As described above, in the T&C type oil well steel pipe with a threaded connection 1, the pipe main body 10 includes the pin tube body 11 and the coupling 12. In other words, in the T&C type oil well steel pipe with a threaded connection 1, the pipe main body 10 is constituted by fastening two separate members (the pin tube body 11 and the coupling 12). In contrast, in the integral type oil well steel pipe with a threaded connection 1, the pipe main body 10 is formed in an integral manner.

The pin 40 is formed at the first end portion 10A of the pipe main body 10. When performing fastening, the pin 40 is inserted in and screwed into the box 50 of another integral type oil well steel pipe with a threaded connection 1, and thereby fastened to the box 50 of the other integral type oil well steel pipe with a threaded connection 1. The box 50 is formed at the second end portion 10B of the pipe main body 10. When performing fastening, the pin 40 of another integral type oil well steel pipe with a threaded connection 1 is inserted in and screwed into the box 50, to thereby fasten the box 50 to the pin 40 of the other integral type oil well steel pipe with a threaded connection 1.

The structure of the pin 40 of the integral type oil well steel pipe with a threaded connection 1 is the same as the structure of the pin 40 of the T&C type oil well steel pipe with a threaded connection 1 illustrated in FIG. 5. Likewise, the structure of the box 50 of the integral type oil well steel pipe with a threaded connection 1 is the same as the structure of the box 50 of the T&C type oil well steel pipe with a threaded connection 1 illustrated in FIG. 6. Note that, in FIG. 8, in the pin 40, the pin shoulder surface, the pin sealing surface, the external thread part, the pin sealing surface, the pin shoulder surface, the pin sealing surface and the external thread part are disposed in that order from the front end of the first end portion 10A toward the center of the pipe main body 10. Therefore, in the box 50, the internal thread part, the box sealing surface, the box shoulder surface, the box sealing surface, the internal thread part, the box sealing surface and the box shoulder surface are disposed in that order from the front end of the second end portion 10B toward the center of the pipe main body 10. However, similarly to FIG. 5, it suffices that the pin contact surface 400 of the pin 40 of the integral type oil well steel pipe with a threaded connection includes at least the external thread part 41. Further, similarly to FIG. 6, it suffices that the box contact surface 500 of the box 50 of the integral type oil well steel pipe with a threaded connection includes at least the internal thread part 51.

The oil well steel pipe with a threaded connection 1 of the present embodiment may be a T&C type or may be an integral type.

### [Oil well steel pipe with a threaded connection in which external thread part 41 and internal thread part 51 are wedge threads]

As illustrated in FIG. 7, the oil well steel pipe with a threaded connection of the present embodiment need not include shoulder surfaces (pin shoulder surface 43 and box shoulder surface 53). In this case, the external thread part 41 and the internal thread part 51 may be wedge threads (dovetail-shaped tapered threads). In a case where the external thread part 41 and the internal thread part 51 are wedge threads, the thread ridge width of the external thread part 41 tapers down to become narrower in the direction of advancement of the right-hand thread along the helix of the thread. Further, the thread root width of the internal thread part 51 opposing the external thread part 41 also tapers down to become narrower in the direction of advancement of the right-hand thread along the helix of the thread. In a case where the external thread part 41 and the internal thread part 51 are wedge threads, the load flank and the stabbing flank are both negative angles, and the load flanks contact each other and the stabbing flanks contact each other. By this means, the entire thread parts firmly fit together, and high fastening torque can be maintained. Further, in the fastening state, because the respective thread ridge faces and thread root faces of the thread parts 41 and 51 contact each other, sealing performance can be secured. As mentioned above, in a case where the external thread part 41 and the internal thread part 51 are wedge threads, the oil well steel pipe with a threaded connection need not include shoulder surfaces (pin shoulder surface 43 and the box shoulder surface 53).

### [Regarding structure on box contact surface 500 of box 50]

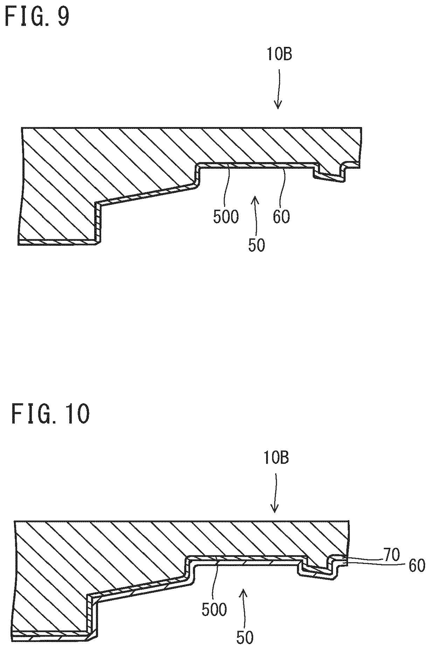

Referring to FIG. 9, the box 50 includes a solid lubricant coating 60 on the box contact surface 500.

### [Solid lubricant coating 60]

The solid lubricant coating 60 enhances the lubricity of the box 50 of the oil well steel pipe with a threaded connection 1 with respect to the pin 40 during fastening. The solid lubricant coating 60 is a solid coating at normal temperature (20°C ± 15°C). The solid lubricant coating 60 includes a binder and a lubricant addition agent. As necessary, the solid lubricant coating 60 may contain a solvent and other components in addition to a binder and a lubricant addition agent. Hereunder, the respective components (binder and lubricant addition agent) of the solid lubricant coating 60 are described in detail.

### [Binder]

The binder causes the lubricant addition agent to bind in the solid lubricant coating 60. In the present embodiment, the binder contains one or more types selected from the group consisting of an organic resin, an inorganic resin and a mixture of these. When using an organic resin as the binder, the organic resin is one type or more of a thermosetting resin and a thermoplastic resin. The thermosetting resin is, for example, one or more types selected from the group consisting of epoxy resin, polyimide resin, polycarbodiimide resin, polyethersulfone resin, polyether ether ketone resin, polyurethane resin, phenol resin, furan resin, urea resin and acrylic resin. The thermoplastic resin is, for example, one or more types selected from the group consisting of polyamide-imide resin, polyethylene resin, polypropylene resin, polystyrene resin and ethylene vinyl acetate resin.

In the case of using an inorganic resin as the binder, the inorganic resin is, for example, a polymetalloxane. The term "polymetalloxane" refers to a macromolecular compound in which repeated metal-oxygen bonds are the main chain backbone. Preferably, the inorganic resin is one or more types selected from the group consisting of polytitanoxane (Ti-O) and polysiloxane (Si-O). These inorganic resins are obtained by causing metal alkoxide to undergo hydrolysis and condensation. The alkoxy group of the metal alkoxide is, for example, a lower alkoxy group such as a methoxy group, ethoxy group, propoxy group, isopropoxy group, isobutoxy group, butoxy group or a tert-butoxy group.

If the melting temperature of the binder is too high, application of the composition by a hot melt process becomes difficult. On the other hand, if the melting temperature of the binder is too low, the solid lubricant coating 60 will soften in high-temperature environments. In such a case, adhesiveness of the solid lubricant coating 60 with respect to the box contact surface 500 will decrease. Therefore, the binder preferably contains at least one type of resin selected from the group consisting of an ethylene vinyl acetate resin having a melting temperature (or softening temperature) in the range of 80 to 320°C and a polyolefin resin having a melting temperature (or softening temperature) in the range of 80 to 320°C. More preferably, the binder contains at least one type of resin selected from the group consisting of an ethylene vinyl acetate resin having a melting temperature (or softening temperature) in the range of 90 to 200°C and a polyolefin resin having a melting temperature (or softening temperature) in the range of 90 to 200°C.

The ethylene vinyl acetate resin is preferably a mixture of two or more ethylene vinyl acetate resins having different melting temperatures in order to inhibit rapid softening due to a temperature increase. Likewise, the polyolefin resin is preferably a mixture of two or more polyolefin resins having different melting temperatures.

The content of the binder in the solid lubricant coating 60 is preferably in the range of 50 to 80 mass%. When the content of the binder is 50 mass% or more, the adhesiveness of the solid lubricant coating 60 increases further. When the content of the binder is 80 mass% or less, the solid lubricant coating 60 retains lubricity more favorably.

The lower limit of the content of the binder in the solid lubricant coating 60 is more preferably 55 mass%, further preferably is 60 mass%, and further preferably is 65 mass%. The upper limit of the content of the binder in the solid lubricant coating 60 is more preferably 78 mass%, and further preferably is 75 mass%.

### [Lubricant addition agent]

The term "lubricant addition agent" is a generic term for addition agents that have lubricity. A lubricant addition agent lowers the coefficient of friction on the surface of the solid lubricant coating 60. Lubricant addition agents are broadly classified into the following four types. The lubricant addition agent contains at least one type selected from the group consisting of the following (1) to (4):
(1) Lubricant addition agents having a particular crystal structure, for example, a lamellar hexagonal crystal structure, in which slipping easily occurs and which thereby exhibits lubricity (for example, one type or more selected from the group consisting of graphite, zinc oxide, and boron nitride);
(2) Lubricant addition agents including a reactive element in addition to a crystal structure and thereby exhibiting lubricity (for example, one type or more selected from the group consisting of molybdenum disulfide, tungsten disulfide, graphite fluoride, tin sulfide, and bismuth sulfide);
(3) Lubricant addition agents exhibiting lubricity due to chemical reactivity (for example, thiosulfate compounds); and
(4) Lubricant addition agents exhibiting lubricity due to plastic or viscoplastic behavior under frictional stresses (for example, polyamide, and polytetrafluoroethylene (PTFE)).

A lubricant addition agent described in any of the above (1) to (4) can be used. A plurality of the lubricant addition agents described in the above (1) to (4) may also be used in combination. That is, the solid lubricant coating may contain one type or more selected from the group consisting of graphite, zinc oxide, boron nitride, molybdenum disulfide, tungsten disulfide, graphite fluoride, tin sulfide, bismuth sulfide, thiosulfate compounds and polyamide.

The content of the lubricant addition agent in the solid lubricant coating 60 is preferably in a range of 10 to 25 mass%. When the content of the lubricant addition agent is 10 mass% or more, the shouldering torque can be suppressed to an additionally lower amount. On the other hand, when the content of the lubricant addition agent is 25 mass% or less, the strength of the solid lubricant coating 60 increases further. Therefore, wear of the solid lubricant coating 60 can be inhibited.

The lower limit of the content of the lubricant addition agent in the solid lubricant coating 60 is more preferably 12 mass%, and further preferably is 15 mass%. The upper limit of the content of the lubricant addition agent in the solid lubricant coating 60 is more preferably 23 mass%, and further preferably is 20 mass%.

In a case where it is necessary to dissolve or disperse the lubricant addition agent and the binder, a solvent is used. The solvent is not particularly limited as long as the solvent can disperse or dissolve components contained in the solid lubricant coating 60. Examples of the solvent include water, alcohol, and an organic solvent. The solvent may contain a small amount of a surfactant. The proportion of the solvent is not particularly limited. It suffices to adjust the proportion of the solvent to an appropriate viscosity of the composition according to the application method. The proportion of the solvent is, for example, within a range of 40 to 60 mass% when taking the total of all components other than the solvent as 100 mass%. The organic solvent is, for example, one type or more selected from toluene and isopropyl alcohol. Most of the solvent is volatilized when forming the solid lubricant coating 60. However, for example, 1 mass% or less of the solvent may remain in the solid lubricant coating 60.

### [Other components in solid lubricant coating 60]

The solid lubricant coating 60 may contain, in addition to the components described above, one type of component or more selected from the group consisting of an anti-rust addition agent, a plasticizer, a surfactant, a coloring agent, an antioxidant agent, and an inorganic powder for adjustment of the sliding properties. The inorganic powder is, for example, one type or more selected from a powder of titanium dioxide and a powder of bismuth oxide. The content of the other components is, for example, 5 mass% or less in total. The solid lubricant coating 60 may further include an extreme pressure agent and a liquid oil solution or the like in very small amounts of 2 mass% or less. The content of other components in the solid lubricant coating 60 is, for example, 10 mass% or less in total.

The thickness of the solid lubricant coating 60 is preferably within a range of 10 to 40 µm. When the thickness of the solid lubricant coating 60 is 10 µm or more, a high lubricity can be obtained with further consistency. On the other hand, when the thickness of the solid lubricant coating 60 is 40 µm or less, the adhesiveness of the solid lubricant coating 60 is additionally consistent. Furthermore, when the thickness of the solid lubricant coating 60 is 40 µm or less, the thread tolerance (clearance) of the sliding surfaces widens, and consequently the interfacial pressure during sliding becomes lower. Therefore, the fastening torque can be inhibited from becoming excessively high. Accordingly, a preferable thickness of the solid lubricant coating 60 is within the range of 10 to 40 µm. A more preferable lower limit of the thickness of the solid lubricant coating 60 is 15 µm, and further preferably is 20 µm. A more preferable upper limit of the thickness of the solid lubricant coating 60 is 35 µm, and further preferably is 30 µm.

The thickness of the solid lubricant coating 60 is measured by the following method. The box 50 having the solid lubricant coating 60 is prepared. The box 50 is cut perpendicularly to the axial direction (longitudinal direction) of the oil well steel pipe. In the obtained cross section, a region including the solid lubricant coating 60 is subjected to microscopic observation. The magnification ratio for the microscopic observation is set to x500. The thickness of the solid lubricant coating 60 in an arbitrary 10 visual fields is determined. In each visual field, the thickness of the solid lubricant coating 60 at an arbitrary three locations is measured, and the average of the measured thicknesses is defined as the thickness of the solid lubricant coating 60 in the relevant visual field. The average of the thicknesses of the solid lubricant coating 60 in the 10 visual fields is defined as the thickness of the solid lubricant coating 60 at the box 50 of the oil well steel pipe with a threaded connection.

### [Regarding plating coating 70 formed on box contact surface 500]

The box 50 of the oil well steel pipe with a threaded connection 1 of the present embodiment may include a plating coating 70 on the box contact surface 500. In this case, the solid lubricant coating 60 is formed on the plating coating 70.

FIG. 10 is a view illustrating an example of the structure of the box 50 of the oil well steel pipe with a threaded connection 1 of the present embodiment. Referring to FIG. 10, the box 50 of the oil well steel pipe with a threaded connection 1 includes the plating coating 70 and the solid lubricant coating 60 on the box contact surface 500. The plating coating 70 is formed on the box contact surface 500. The solid lubricant coating 60 is formed on the plating coating 70.

The kind of the plating coating 70 is not particularly limited. The plating coating 70, for example, may be a Zn plating coating, an Ni plating coating, a Cu plating coating, a Zn-Ni alloy plating coating, a Zn-Co alloy plating coating, an Ni-W alloy plating coating, or a Cu-Sn-Zn alloy plating coating. The plating coating 70 may be formed by laminating a plurality of plating coatings. For example, an Ni plating coating may be formed on the box contact surface 500, and a Zn-Ni plating coating may further be laminated and formed on the Ni plating coating.

In a case where the plating coating 70 is a Zn-Ni alloy plating coating, the chemical composition of the Zn-Ni alloy plating coating consists of, for example, Ni: 10 to 20 mass%, with the balance being Zn and impurities. In a case where the plating coating 70 is a Cu-Sn-Zn alloy plating coating, the chemical composition of the Cu-Sn-Zn alloy plating coating consists of, for example, Cu: 40 to 70 mass%, Sn: 20 to 50 mass%, and Zn: 2 to 20 mass%, with the balance being impurities. In a case where the plating coating 70 is a Cu plating coating, the chemical composition of the Cu plating coating consists of, for example, Cu and impurities.

In a case where the plating coating 70 is formed, a chemical treatment coating may be formed on the surface of the plating coating 70. In this case, the solid lubricant coating 60 is formed on the chemical treatment coating. The details of the chemical treatment coating are described later.

### [Regarding structure on pin contact surface 400 of pin 40]

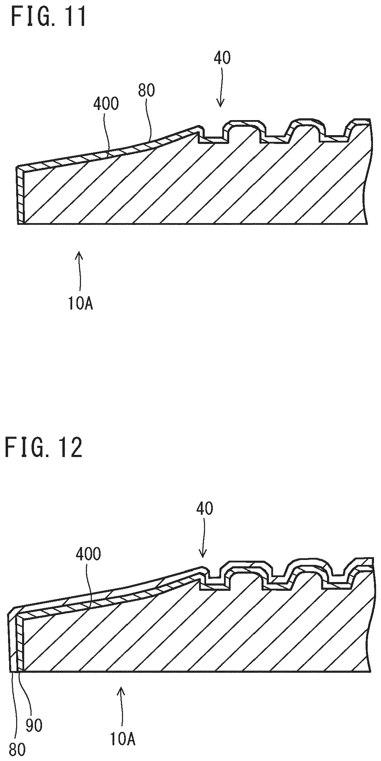

Referring to FIG. 11, the pin 40 includes a light oil 80 on the pin contact surface 400.

### [Light oil 80]

The light oil 80 is applied on the pin contact surface 400. The light oil 80 is a liquid composition. The chemical composition of the light oil 80 contains, for example, a mineral spirit in an amount of 50 to 70 mass%, and a petroleum-based oil in an amount of 25 mass% or less.

### [Mineral spirit]

The mineral spirit is a solvent that is equivalent to industrial gasoline No. 4 defined in JIS K 2201 (1991). A preferable lower limit of the content of the mineral spirit is 52%, more preferably is 54%, further preferably is 56%, and further preferably is 58%. A preferable upper limit of the content of the mineral spirit is 68%, further preferably is 66%, more preferably is 64%, and further preferably is 62%.

### [Petroleum-based oil]

The petroleum-based oil is oil obtained by refining crude oil. The petroleum-based oil is composed of, for example, one type or more selected from the group consisting of a paraffinic oil, a naphthenic oil and an aromatic oil. A preferable lower limit of the content of the petroleum-based oil is 2%, more preferably is 4%, further preferably is 6%, and further preferably is 8%. A preferable upper limit of the content of the petroleum-based oil is 22%, more preferably is 20%, further preferably is 18%, and further preferably is 16%.

### [Anti-rust addition agent]

The light oil 80 may also include an anti-rust addition agent in addition to a mineral spirit and a petroleum-based oil. The term "anti-rust addition agent" is a generic term for addition agents that have corrosion resistance. The anti-rust addition agent is composed of, for example, one type or more selected from the group consisting of aluminum tripolyphosphate, aluminum phosphite, and calcium ion-exchanged silica. Preferably, the anti-rust addition agent is composed of one type or more of addition agent selected from the group consisting of calcium ion-exchanged silica and aluminum phosphite. Other commercially available reactive water repellent agents or the like can also be used as the anti-rust addition agent.

The content of the anti-rust addition agent in the light oil 80 is preferably, in mass%, 10% or less. A preferable upper limit of the anti-rust addition agent in the light oil 80 is 9%, and more preferably is 8%. A preferable lower limit of the anti-rust addition agent in the light oil 80 is 1%, more preferably is 2%, and further preferably is 3%. Note that, the light oil 80 need not contain the anti-rust addition agent mentioned above. In other words, the chemical composition of the light oil 80 may contain a mineral spirit and a petroleum-based oil, with the balance being impurities.

Note that, the light oil 80 substantially does not contain heavy metal powder. In other words, in the light oil 80, heavy metal powder is an impurity. A heavy metal powder is, for example, powder (particles) of Pb, Cu, Zn or the like. Therefore, the oil well steel pipe with a threaded connection of the present embodiment can also be used in a marine oil well for which the use of a compound grease containing a heavy metal powder is prohibited.

### [Preferable viscosity of light oil 80]

A preferable viscosity of the light oil 80 at 22°C using Zahn cup #1 is 27.5±1 secs. However, the viscosity of the light oil 80 is not limited thereto.

### [Well-known example of light oil 80]

The light oil 80 is, for example, the product with the trade name "WD-40".

The light oil 80 is a liquid, and the viscosity thereof is lower than the viscosity of an anti-rust grease such as storage dope. Therefore, a special apparatus is not required when applying the light oil 80 onto the pin contact surface 400. Accordingly, the light oil is excellent in repairability in comparison to a solid anti-rust coating. In addition, the light oil 80 is thinly applied onto the pin contact surface 400. Therefore, as mentioned above, in oil well steel pipes (oil well steel pipes connected body) that were fastened together, there is almost no occurrence of clogging at the inner surface which occurs in the case of using an anti-rust grease.

### [Regarding chemical treatment coating 90 formed on pin contact surface 400]

The pin 40 of the oil well steel pipe with a threaded connection 1 of the present embodiment may further include a chemical treatment coating 90 on the pin contact surface 400. In such case, the light oil 80 is applied onto the chemical treatment coating 90.

FIG. 12 is a view illustrating an example of the structure of the pin 40 of the oil well steel pipe with a threaded connection 1 of the present embodiment. Referring to FIG. 12, in the pin 40 of the oil well steel pipe with a threaded connection 1, the chemical treatment coating 90 is formed on the pin contact surface 400. Further, the light oil 80 is applied onto the chemical treatment coating 90.

The chemical treatment coating 90 is, for example, composed of one type of coating or more selected from the group consisting of a phosphate chemical treatment coating, an oxalate chemical treatment coating and a borate chemical treatment coating. Preferably, the chemical treatment coating 90 is a phosphate chemical treatment coating.

The chemical treatment coating 90 is porous. Therefore, when the light oil 80 is applied onto the chemical treatment coating 90, the adhesiveness (retaining power) of the light oil 80 on the pin contact surface 400 increases. The thickness of the chemical treatment coating 90 is not particularly limited. A preferable thickness of the chemical treatment coating 90 is 5 to 40 µm. If the thickness of the chemical treatment coating 90 is 5 µm or more, the corrosion resistance is further enhanced. If the thickness of the chemical treatment coating is 40 µm or less, the retentivity of the light oil 80 increases with additional consistency.

Note that, the pin 40 need not include the chemical treatment coating 90, and the light oil 80 may be applied directly onto the pin contact surface 400. In particular, in a case where the oil well steel pipe with a threaded connection 1 is composed of carbon steel in which there is not a large amount of alloy elements, more specifically, in a case where the content of Cr in the chemical composition of the base metal of the oil well steel pipe with a threaded connection 1 is, in mass%, 2.0% or less, preferably, in the pin 40, the chemical treatment coating 90 is formed on the pin contact surface 400, and the light oil 80 is applied onto the chemical treatment coating 90. For example, in a case where the content of Cr is 2.0% or less in the chemical composition of the base metal of the oil well steel pipe with a threaded connection 1, the corrosion resistance of the base metal itself of the oil well steel pipe with a threaded connection 1 is not so high. In a case where the content of Cr is 2.0% or less in the chemical composition of the base metal of the oil well steel pipe with a threaded connection 1, in the pin 40, if the chemical treatment coating 90 is formed on the pin contact surface 400 and, furthermore, the light oil 80 is applied onto the chemical treatment coating 90, the corrosion resistance of the pin contact surface 400 can be increased. In this case, during a period (one week to one month) in which the oil well steel pipe with a threaded connection 1 is being temporarily stored at an oil well drilling site, the occurrence of rust on the pin contact surface 400 of the pin 40 can be more consistently suppressed.

In a case where content of Cr is 2.0% or less in the chemical composition of the base metal of the oil well steel pipe with a threaded connection 1, preferably the pin contact surface 400 of the oil well steel pipe with a threaded connection 1 is also subjected to a blasting treatment, and the chemical treatment coating 90 is formed on the pin contact surface 400 that was subjected to a blasting treatment, and the light oil 80 is formed onto the chemical treatment coating 90. Here, the term "blasting treatment" refers to a treatment in which a blasting apparatus is used to cause a blast material (an abrasive) to collide against the box contact surface 500. The blasting treatment is, for example, a sand blasting treatment. In this case, the adherence of the chemical treatment coating 90 to the pin contact surface 400 further increases. Therefore, the adherence of the light oil 80 to the pin contact surface 400 further increases.

### [Regarding light oil 80 applied onto pin contact surface 400 subjected to blasting treatment]

In a case where the base metal of the oil well steel pipe with a threaded connection 1 is a stainless steel as typified by, for example, so-called "13Cr steel", the pin contact surface 400 of the oil well steel pipe with a threaded connection 1 may be subjected to a blasting treatment, and the light oil 80 may be formed onto the pin contact surface 400 that was subjected to the blasting treatment. In this case, the adherence of the light oil 80 to the pin contact surface 400 increases because of microscopic unevenness formed on the pin contact surface 400 that was subjected to the blasting treatment.

### [Base metal of oil well steel pipe with a threaded connection 1]

The base metal of the oil well steel pipe with a threaded connection 1 is not limited to the aforementioned carbon steel, and is not particularly limited. The base metal may be, for example, a carbon steel, a stainless steel as typified by so-called "13Cr steel", or an alloy steel that is other than a stainless steel. Among alloy steels, an Ni alloy or a duplex stainless steel containing an alloying element such as Cr, Ni or Mo has high corrosion resistance. Therefore, by using an Ni alloy or a duplex stainless steel as a base metal, excellent corrosion resistance is obtained in a corrosive environment that contains hydrogen sulfide or carbon dioxide or the like.

### [Regarding action of oil well steel pipe with a threaded connection 1 of present embodiment]

In the oil well steel pipe with a threaded connection 1 of the present embodiment, the light oil 80 does not contain a heavy metal powder. In addition, the light oil 80 does not require the use of a dedicated apparatus or the like corresponding to a hot-melt apparatus or the like that is required in the case of forming a solid anti-rust coating. The light oil 80 can be easily applied to the pin contact surface 400 by spray coating or using a brush or the like. Therefore, at a local yard, immediately before delivering the oil well steel pipe with a threaded connection 1 to an oil well drilling site, after an anti-rust grease that is applied onto the pin contact surface 400 is removed, the light oil 80 can be easily applied onto the pin contact surface 400. In addition, the corrosion resistance of the pin contact surface 400 of the pin 40 during a period (one week to one month) in which the oil well steel pipe with a threaded connection 1 is temporarily stored at the oil well drilling site after being delivered from the local yard can be increased, and the occurrence of rust on the pin contact surface 400 can be suppressed during the period until the oil well steel pipe with a threaded connection 1 is actually used at the oil well drilling site. Furthermore, even if a case arises in which, at the time of delivery at the oil well drilling site, some of the light oil 80 applied to the pin contact surface 400 comes off from the pin contact surface 400 due to contact with another oil well steel pipe with a threaded connection or the like, the problem can be easily repaired by applying the light oil 80 to the relevant place on the pin contact surface. In other words, the pin contact surface to which light oil 80 has been applied is more excellent in repairability than a pin contact surface 400 on which a solid anti-rust coating has been formed.

In addition, the oil well steel pipe with a threaded connection 1 of the present embodiment in which the light oil 80 is applied can keep the shouldering torque Ts at a low level during fastening to another oil well steel pipe with a threaded connection 1. As illustrated in FIG. 2, the shouldering torque Ts of an oil well steel pipe with a threaded connection in which the light oil 80 is applied (Test Numbers 1 and 2) is lower than in an oil well steel pipe with a threaded connection in which a solid anti-rust coating is formed (Test Number 3). Note that, as illustrated in FIG. 2, the yield torque Ty of an oil well steel pipe with a threaded connection in which the light oil 80 is applied (Test Numbers 1 and 2) is about equal to the yield torque Ty of a conventional oil well steel pipe with a threaded connection in which a solid anti-rust coating is formed (Test Number 3). Therefore, in the oil well steel pipe with a threaded connection 1 of the present embodiment also, it is possible to perform fastening at a high fastening torque To.

### [Method for producing oil well steel pipes connected body using the oil well steel pipe with a threaded connection 1 of present embodiment]

In the present description, a structure in which a plurality of oil well steel pipes with a threaded connection 1 are fastened is referred to as an "oil well steel pipes connected body". An oil well steel pipes connected body may be a casing pipe, may be a tubing pipe, or may be a drill pipe. The oil well steel pipes connected body is produced (fastened) at the oil well drilling site. Hereunder, the method for producing the oil well steel pipes connected body is described.

In the present description, the term "oil well drilling site" refers to an actual place when drilling of an oil well is being performed. An oil well drilling site may be on land or may be offshore, and a drilling rig is provided at the oil well drilling site. A derrick (drilling derrick) is provided in the drilling rig, and oil well steel pipes connected body is produced by joining oil well steel pipes with a threaded connection together in the derrick. In a case where the oil well drilling site is offshore, a floating production storage and offloading (FPSO) may be provided instead of a drilling rig.

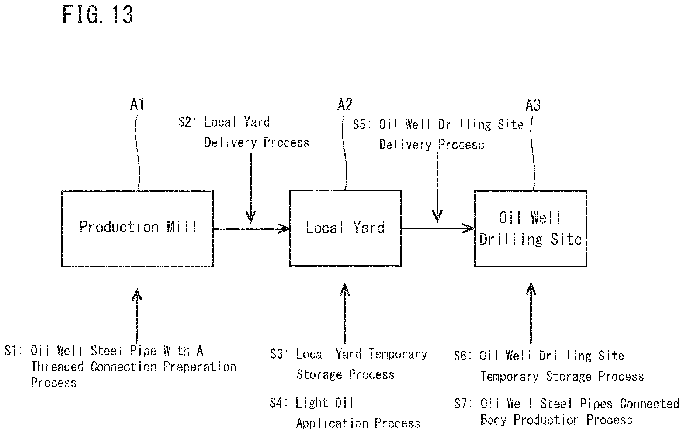

FIG. 13 is a view that schematically illustrates the locations for performing each process in the method for producing oil well steel pipes connected body of the present embodiment. Referring to FIG. 13, the method for producing oil well steel pipes connected body of the present embodiment includes: a process of preparing an oil well steel pipe with a threaded connection (oil well steel pipe with a threaded connection preparation process: S1); a process of delivering an oil well steel pipe with a threaded connection 1 to a local yard A2 (local yard delivery process: S2); a process of temporarily storing the oil well steel pipe with a threaded connection 1 at the local yard A2 (local yard temporary storage process: S3); a process of, before delivering the oil well steel pipe with a threaded connection 1 from the local yard A2 to an oil well drilling site A3, removing anti-rust grease and applying the light oil 80 (light oil application process: S4); a process of delivering the oil well steel pipe with a threaded connection 1 to which the light oil 80 has been applied from the local yard A2 to the oil well drilling site A3 (oil well drilling site delivery process: S5); a process of temporarily storing the oil well steel pipe with a threaded connection at the oil well drilling site A3 (oil well drilling site temporary storage process: S6); and a process of using the oil well steel pipe with a threaded connection that is temporarily stored at the oil well drilling site A3 to form oil well steel pipes connected body by fastening the oil well steel pipe with a threaded connection to another oil well steel pipe with a threaded connection 1 (oil well steel pipes connected body production process: S7).

The production processes S1 to S7 are performed at different locations. Specifically, the oil well steel pipe with a threaded connection preparation process S1 is performed at a plant A1 that produces the oil well steel pipe with a threaded connection (hereunder, referred to as "production mill A1"). The local yard temporary storage process S3 and the light oil application process S4 are performed at the local yard A2. The oil well drilling site temporary storage process S6 and the oil well steel pipes connected body production process S7 are performed at the oil well drilling site A3.

The production mill A1, the local yard A2 and the oil well drilling site A3 are at different locations to each other. Usually, the production mill A1 is situated far away from the oil well drilling site A3 at which the oil well drilling operations are performed. Therefore, an oil well steel pipe with a threaded connection produced at the production mill A1 is delivered by a land route or a sea route to the oil well drilling site A3. However, in many cases, at the oil well drilling site A3, there is no place to store all the oil well steel pipes with a threaded connection that are to be used for the oil well drilling operations. For example, in a case where the oil well drilling site A3 is an offshore drilling rig or an FPSO, the number of oil well steel pipes with a threaded connection that can be temporarily stored at the drilling rig or FPSO is limited.

Therefore, in usual oil well drilling operations, the local yard A2 that is capable of temporarily storing a plurality of oil well steel pipes with a threaded connection is prepared at a location that is close to the oil well drilling site A3. Accordingly, when performing oil well drilling operations, first, an oil well steel pipe with a threaded connection that was produced at the production mill A1 is delivered to the local yard A2 by a land route or a sea route (local yard delivery process S2). The oil well steel pipe with a threaded connection is then temporarily stored at the local yard A2. Subsequently, at a stage immediately before the oil well steel pipes with a threaded connection is to be used, the oil well steel pipe with a threaded connection is delivered from the local yard A2 to the oil well drilling site A3 (oil well drilling site delivery process S5). In short, the local yard A2 is utilized as a place for temporarily storing oil well steel pipes with a threaded connection.

As described above, in oil well drilling operations, it is usual to provide the local yard A2 as a transit point between the production mill A1 and the oil well drilling site A3. The local yard A2 is, naturally, provided closer to the oil well drilling site A3 than the production mill A1. Generally, an oil well steel pipe with a threaded connection that was transported from the production mill A1 is temporarily stored for a long time period at the local yard A2. Specifically, an oil well steel pipe with a threaded connection that was transported from the production mill A1 is temporarily stored for a long time period of about six months to two years at the local yard A2. Subsequently, immediately before being used at the oil well drilling site A3, the oil well steel pipe with a threaded connection is delivered from the local yard A2 to the oil well drilling site A3. At the oil well drilling site A3, the oil well steel pipe with a threaded connection is again temporarily stored at the oil well drilling site A3 for a short time period of about one week to one month until being used in oil well steel pipes connected body, that is, until being fastened to another oil well steel pipe with a threaded connection to form oil well steel pipes connected body.

As mentioned above, recently, in order to suppress the occurrence of contamination at oil well drilling sites, it is desired to avoid the use of heavy metal powders when producing oil well steel pipes connected body. Therefore, conventionally, a solid lubricant coating and a solid anti-rust coating have been utilized instead of using a compound grease containing a heavy metal powder.

However, when delivering oil well steel pipes with a threaded connection that have a solid anti-rust coating formed on a pin contact surface and have a solid lubricant coating formed on a box contact surface from the production mill A1 to the local yard A2, and when delivering the oil well steel pipes with a threaded connection from the local yard A2 to the oil well drilling site A3, in some cases the pins of the oil well steel pipes with a threaded connection bump against each other during delivery, or the pins of the oil well steel pipes with a threaded connection bump against equipment or the like. At the pin, a pin contact surface is formed on the outer peripheral surface of the end portion of the pipe main body. Therefore, in some cases a solid anti-rust coating that is formed on the pin contact surface is damaged or a part of the solid anti-rust coating is fractured due to bumping during delivery. Further, there are also cases where an external thread part, a pin sealing surface and a pin shoulder surface on the pin contact surface are damaged or fractured due to bumping.

Usually, a pin contact surface manufacturing apparatus is provided at the local yard A2 on the assumption that a pin contact surface may suffer damage during delivery. For example, in a case where a pin contact surface is damaged by bumping, the pin of the relevant oil well steel pipe with a threaded connection is cut off. A pin contact surface is then newly formed by performing threading with respect to the end portion of the oil well steel pipe from which the pin was cut off, using the pin contact surface manufacturing apparatus.

As mentioned above, in a case where a pin contact surface is damaged, it is possible to regenerate a pin contact surface using a pin contact surface manufacturing apparatus that is provided at the local yard A2. However, it is difficult to regenerate a solid anti-rust coating at the local yard A2. The reason is that, usually, an apparatus for forming a solid anti-rust coating (hereunder, referred to as "solid anti-rust coating manufacturing apparatus") is not provided at the local yard A2. If a solid anti-rust coating manufacturing apparatus is provided at the local yard A2, it is possible to regenerate (form again) a solid anti-rust coating. However, in the case of providing a solid anti-rust coating manufacturing apparatus at the local yard A2, naturally, there will be costs incurred in providing the solid anti-rust coating manufacturing apparatus.

Therefore, in the method for producing oil well steel pipes connected body of the present embodiment, although a solid lubricant coating is formed on the box contact surface, usage of a solid anti-rust coating on the pin contact surface is avoided. As mentioned above, the storage period (six months to two years) of the oil well steel pipe with a threaded connection at the local yard A2 is much longer than the storage period (one week to one month) of the oil well steel pipe with a threaded connection at the oil well drilling site A3. For a period of about one month, the aforementioned light oil 80 that is a liquid can suppress the occurrence of rust on the pin contact surface 400 even when stored outdoors. However, in a case where the storage period is more than one month, in some cases sufficient corrosion resistance is not obtained when using the light oil 80. Therefore, if the oil well steel pipe with a threaded connection 1 in which the light oil 80 is applied onto the pin contact surface 400 is produced at the production mill A1 and then delivered to the local yard A2, rust may occur on the pin contact surface 400 of the oil well steel pipe with a threaded connection 1 while being stored at the local yard A2.

On the other hand, a method is also conceivable in which an anti-rust grease, and not the light oil 80, is applied onto the pin contact surface 400. An anti-rust grease is an anti-rust composition in a semi-solid state or a paste state. The anti-rust grease is, for example, a product with the trade name "RUST VETO AS EU" or a product with the trade name "KENDEX". The anti-rust grease is also referred to as "storage dope". The anti-rust grease exhibits corrosion resistance for a longer time period in comparison to the light oil 80. Specifically, even in a case where the storage period outdoors has reached a period of two years, the anti-rust grease can inhibit the occurrence of rust on the pin contact surface 400. In addition, even in a case where a pin has been re-produced due to bumping or the like, the anti-rust grease can be easily applied onto the pin contact surface.

However, it is not preferable to use an oil well steel pipe with a threaded connection in a state which an anti-rust grease is applied on the pin contact surface in oil well steel pipes connected body at the oil well drilling site A3. The reason is that, similarly to one of the problems with using a compound grease which is described above, the anti-rust grease may be the cause of clogging inside fastened oil well steel pipes (oil well steel pipes connected body). Specifically, most of the anti-rust grease which, at the time of fastening (thread fastening), was applied to the pin contact surface and/or the box contact surface, is discharged to outside from the front end portion of the pin and the box when the fastening is completed. Some of the anti-rust grease is discharged into the inside of the oil well steel pipe from the front end portion of the pin. The viscosity of the anti-rust grease is high. Therefore, the anti-rust grease that was discharged to the inside (inner surface) of the oil well steel pipe accumulates on the inner surface. In some cases the accumulated anti-rust grease is the cause of clogging of the oil well steel pipe.

Therefore, in the method for producing oil well steel pipes connected body of the present embodiment, at the local yard A2, work is performed to replace the anti-rust grease on the pin contact surface 400 with the light oil 80. Specifically, an anti-rust grease is applied onto the pin contact surface of an oil well steel pipe with a threaded connection produced at the production mill A1 (S1). The oil well steel pipe with a threaded connection having the anti-rust grease applied on the pin contact surface is then delivered to the local yard A2 (S2). At the local yard A2, the oil well steel pipe with a threaded connection is temporarily stored (S3). In this case, the storage period outdoors at the local yard A2 is six months to two years. However, in the oil well steel pipe with a threaded connection, the anti-rust grease has been applied onto the pin contact surface. Therefore, during storage outdoors at the local yard A2, the occurrence of rust on the pin contact surface of the oil well steel pipe with a threaded connection can be inhibited. In addition, if an anti-rust grease is applied, even in a case where part of the anti-rust grease comes off for some reason or other, the problem can be easily repaired by applying the anti-rust grease again at the relevant portion (excellent in repairability).

Subsequently, before delivering the oil well steel pipe with a threaded connection from the local yard A2 to the oil well drilling site A3, the anti-rust grease that is applied on the pin contact surface 400 is replaced with the light oil 80 at the local yard A2 to thereby produce the oil well steel pipe with a threaded connection 1 (S4). Specifically, at the local yard A2, the anti-rust grease on the pin contact surface of the oil well steel pipe with a threaded connection is removed. The anti-rust grease is in a semi-solid state or a paste state, and hence the anti-rust grease can be easily removed. The light oil 80 is then applied onto the pin contact surface 400 from which the anti-rust grease was removed. The light oil 80 is a liquid, and has a low viscosity compared to the anti-rust grease. Therefore, the light oil 80 can be easily applied onto the pin contact surface 400. In other words, the light oil 80 is also excellent in repairability.

The oil well steel pipe with a threaded connection 1 that was produced at the local yard A2 by the above process is delivered to the oil well drilling site A3 (S5). The oil well steel pipe with a threaded connection 1 is then temporarily stored at the oil well drilling site A3 (S6). The storage period of the oil well steel pipe with a threaded connection 1 at the oil well drilling site A3 is shorter than the storage period of the oil well steel pipe with a threaded connection (the oil well steel pipe with a threaded connection in which the anti-rust grease is applied to the pin contact surface 400) at the local yard A2, and is within the range of about one week to one month. Therefore, even with the light oil 80, adequate corrosion resistance is exhibited. Consequently, the occurrence of rust on the pin contact surface 400 of the oil well steel pipe with a threaded connection 1 can be inhibited during the storage period at the oil well drilling site A3.

An oil well steel pipes connected body is produced using the oil well steel pipe with a threaded connection 1 that is temporarily stored at the oil well drilling site A3 (S7). Specifically, the box 50 of another oil well steel pipe with a threaded connection 1 is inserted in and screwed into the pin 40 of the oil well steel pipe with a threaded connection 1. At such time, as mentioned above, the light oil 80 on the pin contact surface 400 reduces the shouldering torque Ts in comparison to a solid anti-rust coating. In addition, by removing the anti-rust grease and applying the light oil 80, when the oil well steel pipe with a threaded connection 1 is fastened at the oil well drilling site A3, there is almost no occurrence of clogging caused by the light oil 80 inside the fastened oil well steel pipe.

As described above, in the method for producing oil well steel pipes connected body of the present embodiment, the shouldering torque Ts can be lowered when producing oil well steel pipes connected body. Further, fastening at a high fastening torque To can be realized. In addition, the anti-rust grease and the light oil 80 are also excellent in repairability. In addition, at the oil well drilling site A3, because the oil well steel pipe with a threaded connection 1 on which the light oil 80, and not an anti-rust grease, is applied is used, there is almost no occurrence of clogging caused by the light oil 80 inside the oil well steel pipe (oil well steel pipes connected body) after fastening. In the method for producing oil well steel pipes connected body of the present embodiment, furthermore, because the oil well steel pipe with a threaded connection 1 that includes the solid lubricant coating 60 on the box 50 is used, the oil well steel pipes connected body is also excellent in galling resistance. Hereunder, the respective production processes S1 to S7 in the method for producing oil well steel pipes connected body of the present embodiment are described in detail.

### [Oil well steel pipe with a threaded connection preparation process: S1]

In the oil well steel pipe with a threaded connection preparation process S1, an oil well steel pipe with a threaded connection 200 in which an anti-rust grease has been applied is prepared. The oil well steel pipe with a threaded connection 200 is produced, for example, at the production mill A1.

### [Structure of oil well steel pipe with a threaded connection 200]

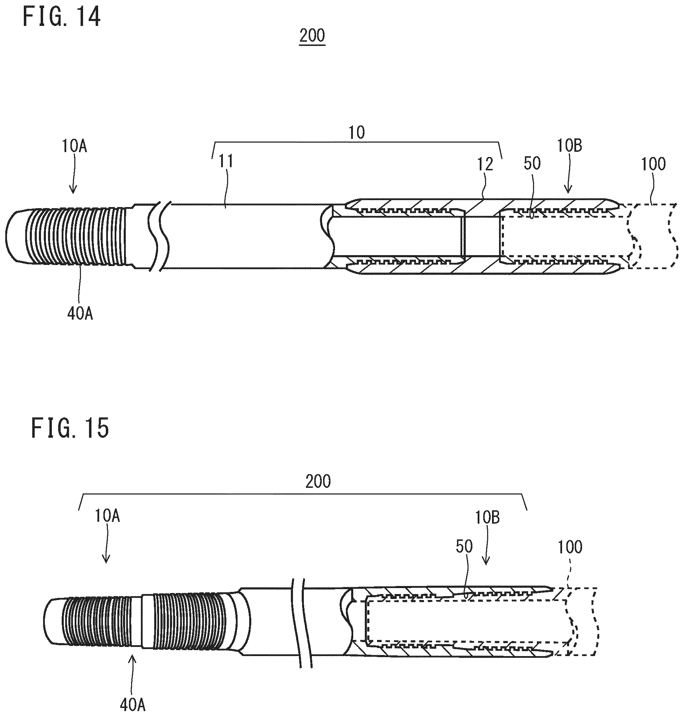

FIG. 14 is a configuration diagram illustrating an example of the oil well steel pipe with a threaded connection 200. FIG. 15 is a configuration diagram illustrating an example of the oil well steel pipe with a threaded connection 200 that is different to FIG. 14. FIG. 14 illustrates a T&C type oil well steel pipe with a threaded connection. FIG. 15 illustrates an integral type oil well steel pipe with a threaded connection. Referring to FIG. 14 and FIG. 15, in comparison to the oil well steel pipe with a threaded connection 1, the oil well steel pipe with a threaded connection 200 includes a pin 40A to which an anti-rust grease is applied, instead of the pin 40 to which the light oil 80 is applied. The remaining structure of the oil well steel pipe with a threaded connection 200 is the same as the structure of the oil well steel pipe with a threaded connection 1.

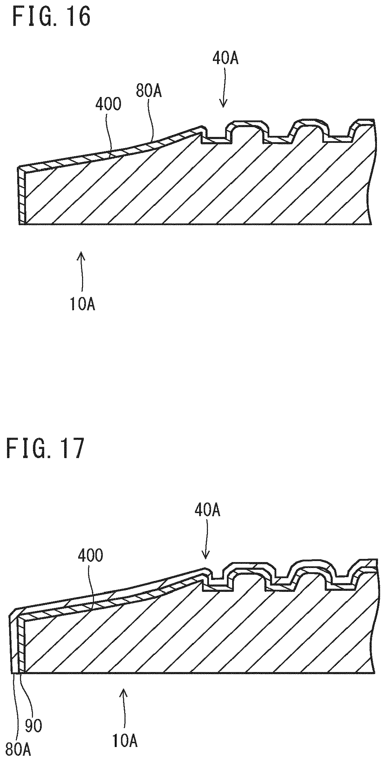

FIG. 16 is a longitudinal section of a portion in the vicinity of the pin contact surface 400 of the pin 40A illustrated in FIG. 14 and FIG. 15. Here, the term "longitudinal section" means a cross section that is parallel to the longitudinal direction of the oil well steel pipe with a threaded connection 200. Referring to FIG. 16, in the pin 40A of the oil well steel pipe with a threaded connection 200, an anti-rust grease 80A, and not the light oil 80, is applied on the pin contact surface 400.

### [Anti-rust grease 80A]

The anti-rust grease 80A is an anti-rust composition in a semi-solid state or a paste state, and is different to the light oil 80 that is a liquid of a comparatively low viscosity. The anti-rust grease 80A is, for example, a product with the trade name "RUST VETO AS EU" or a product with the trade name "KENDEX". The anti-rust grease 80A is also referred to as "storage dope". The anti-rust grease 80A exhibits corrosion resistance for a longer time period in comparison to the light oil 80. Specifically, even in a case where the storage period outdoors has reached a period of two years, the anti-rust grease 80A can inhibit the occurrence of rust on the pin contact surface 400.

The anti-rust grease 80A contains, for example, in mass%, refined mineral oil: 50 to 80%; metallic soap: 2.5 to 10.0%; and a petroleum sulfonic acid and/or a salt thereof: 1.0 to 2.5%. The metallic soap is, for example, lithium 12-hydroxystearate. The petroleum sulfonate is, for example, one type or more selected from the group consisting of sodium petroleum sulfonate, calcium petroleum sulfonate, barium petroleum sulfonate and the like.

FIG. 17 is a longitudinal section of a portion in the vicinity of the pin contact surface 400 of the pin 40A illustrated in FIG. 14 and FIG. 15, that is different to FIG. 16. Referring to FIG. 17, the pin 40A of the oil well steel pipe with a threaded connection 200 may further include the chemical treatment coating 90 on the pin contact surface 400. In this case, in the pin 40A of the oil well steel pipe with a threaded connection 1, the chemical treatment coating 90 is formed on the pin contact surface 400. The anti-rust grease 80A is applied onto the chemical treatment coating 90.

The oil well steel pipe with a threaded connection 200 having the structure described above is produced, for example, by the following method at the production mill A1. Hereunder, one example of a method for producing the oil well steel pipe with a threaded connection 200 is described. However, a method for producing the oil well steel pipe with a threaded connection 200 is not limited to this production method. A method for producing the oil well steel pipe with a threaded connection 200 is not particularly limited as long as the oil well steel pipe with a threaded connection 200 having the structure described above can be prepared.

The method for producing the oil well steel pipe with a threaded connection 200 includes a hollow shell preparation process, a solid lubricant coating formation process, and an anti-rust grease application process.

### [Hollow shell preparation process]

First, a hollow shell with a threaded connection in which the solid lubricant coating 60 is not formed and the anti-rust grease 80A is not applied is prepared. The hollow shell with a threaded connection includes the pipe main body 10. The pipe main body 10 includes the first end portion 10A and the second end portion 10B. The pin 40A is formed at the first end portion 10A. The box 50 is formed at the second end portion 10B. The pin of the hollow shell with a threaded connection includes the pin contact surface 400. The box of the hollow shell with a threaded connection includes the box contact surface 500.

The hollow shell with a threaded connection is produced, for example, by the following method. A starting material is produced using molten steel. Specifically, a cast piece (a slab, bloom or billet) is produced by a continuous casting process using the molten steel. An ingot may also be produced by an ingot-making process using the molten steel. As necessary, the slab, bloom or ingot may be subjected to blooming to produce a cast piece (billet). The starting material (a slab, bloom or billet) is produced by the above process. The prepared starting material is subjected to hot working to produce a hollow shell. The hot working method may be piercing-rolling performed according to the Mannesmann process, or may be a hot-extrusion process. The hollow shell after hot working is subjected to well-known quenching and well-known tempering to adjust the strength of the hollow shell. A hollow shell is produced by the above process. Note that, in a case where the oil well steel pipe with a threaded connection 200 is the T&C type, a hollow shell for the coupling 12 is also prepared. The method for producing the hollow shell for the coupling 12 is the same as the method for producing the hollow shell that is described above.

In a case where the oil well steel pipe with a threaded connection 200 is the T&C type, threading is performed with respect to the outer surface of both end portions of the hollow shell for the pin tube body 11, to form the pin contact surface 400. In addition, threading is performed with respect to the inner surface of both end portions of the hollow shell for the coupling 12, to form the box contact surface 500. The pin of one end of the hollow shell for the pin tube body 11 is inserted in and screwed into the box of one end of the hollow shell for the coupling 12. A hollow shell with a threaded connection including the pin tube body 11 and the coupling 12 is produced by the above process.

In a case where the oil well steel pipe with a threaded connection 200 is the integral type, threading is performed with respect to the outer surface of the first end portion 10A of the hollow shell corresponding to the pipe main body 10 to form the pin contact surface 400. In addition, threading is performed with respect to the outer surface of the second end portion 10B of the hollow shell corresponding to the pipe main body 10 to form the box contact surface 500.

A hollow shell with a threaded connection that includes a pin and a box is produced by the above process.

### [Solid lubricant coating formation process]

In the solid lubricant coating formation process, the solid lubricant coating 60 is formed on the box contact surface 500 of the box of the hollow shell with a threaded connection that was prepared in the hollow shell preparation process. The solid lubricant coating formation process includes an application process and a curing process. The curing process is performed after the application process.

### [Application process]

In the application process, a composition for forming the solid lubricant coating 60 is applied onto the box contact surface 500. The composition contains a resin and a solid lubricant powder. The composition is the same as the composition of the resin of the solid lubricant coating 60 that is described above, excluding a solvent.

The composition may be of a solventless type, or may be of a solvent type. The composition of a solventless type can be produced, for example, by heating the resin to a molten state, adding the solid lubricant powder thereto, and kneading them. The composition may be made of a powder mixture prepared by mixing all the components in powder form.

The composition of a solvent type can be produced, for example, by dissolving or dispersing the resin and the solid lubricant powder in a solvent and mixing them. The solvent is, for example, water, alcohol or an organic solvent. The solvent may contain a small amount of a surfactant. The proportion of the solvent is not particularly limited. It suffices to adjust the proportion of the solvent to an appropriate viscosity for a composition according to the application method. The proportion of the solvent is, for example, within a range of 40 to 60 mass% when taking the total of all components other than the solvent as 100 mass%.

The above-described composition is applied onto the box contact surface 500 by a well-known method. In the case of the composition of a solventless type, for example, the composition can be applied using a hot melt process. In the hot melt process, the composition is heated to melt the resin to place the composition in a fluid state with low viscosity. Application of the composition in a fluid state is performed by spraying the composition from a spray gun having functions for temperature holding. An application method such as brushing or dipping may be employed instead of spray application. The temperature to which the composition is heated is preferably higher than the melting point of the resin by 10 to 50°C.

In the case of the solvent type composition, the composition in solution form can be applied by spray coating. In this case, the viscosity of the composition is to be adjusted so that the composition can be applied by spray coating in an environment of normal temperature and normal pressure. An application method such as brushing or dipping may be employed instead of spray application.

### [Curing process]

In the curing process, the applied composition is cured to form the solid lubricant coating 60. In the case of the solventless type composition, by cooling the composition that was applied onto the box contact surface 500, the composition in a molten state cures and the solid lubricant coating 60 is formed. A well-known method can be performed as the cooling method. Examples of the cooling method include allowing cooling in the atmosphere, and air cooling. In the case of the solvent type composition, by drying the composition that was applied onto the box contact surface 500, the composition cures and the solid lubricant coating 60 is formed. A well-known method can be performed as the drying method. The drying method is, for example, natural drying, low-temperature air drying or vacuum drying. The composition may be caused to cure by performing a heat curing process.

In the solid lubricant coating formation process, the solid lubricant coating 60 is formed on the box contact surface 500 by performing the aforementioned application process and curing process.

### [Plating coating formation process]

In a case where the box 50 of the oil well steel pipe with a threaded connection 200 includes the plating coating 70 between the box contact surface 500 and the solid lubricant coating 60, a plating coating formation process may be performed at a timing that is after the preparation process and before the solid lubricant coating formation process. In other words, the plating coating formation process is an optional process. In a case where the oil well steel pipe with a threaded connection 200 does not include the plating coating 70, the plating coating formation process is not performed.

In the case of performing the plating coating formation process, the plating coating 70 is formed on the box contact surface 500 in the plating coating formation process.

Formation of the plating coating 70 can be performed by a well-known method. Formation of the plating coating 70 may be performed using electroplating or may be performed using electroless plating. For example, in the case of forming the plating coating 70 that is composed of a Zn-Ni alloy by an electroplating method, the plating bath contains zinc ions and nickel ions. The composition of the plating bath preferably contains zinc ions: 1 to 100 g/L and nickel ions: 1 to 50 g/L. The conditions for the electroplating method are, for example, plating bath pH: 1 to 10, plating bath temperature: 60°C, current density: 1 to 100 A/dm², and treatment time: 0.1 to 30 mins. For example, in the case of forming the plating coating 70 that is composed of a Cu-Sn-Zn alloy by an electroplating method, the plating bath contains copper ions: 1 to 50 g/L, tin ions: 1 to 50 g/L, and zinc ions: 1 to 50 g/L. The electroplating conditions may be the same as the aforementioned conditions for forming the plating coating 70 that is composed of a Zn-Ni alloy. In a case where the plating coating 70 is a Cu plating coating, the plating coating 70 can be formed by a well-known method.

### [Preconditioning treatment process]

Note that, the process for producing the oil well steel pipe with a threaded connection 200 may include a preconditioning treatment process that is performed at a timing that is after the preparation process and before the plating coating formation process. In other words, in the case of performing the plating coating formation process, a preconditioning treatment process may be performed before the plating coating formation process. The preconditioning treatment process is, for example, a pickling treatment or a blasting treatment. The surface roughness of the box contact surface 500 of the hollow shell with a threaded connection can be adjusted by the preconditioning treatment process. In this case, the adhesiveness of the plating coating 70 with respect to the box contact surface 500 increases. Hereunder, the pickling treatment and the blasting treatment are described.

### [Pickling treatment]

The pickling treatment is a treatment in which the box contact surface 500 is immersed in a solution of a strong acid such as sulfuric acid, hydrochloric acid, nitric acid, or hydrofluoric acid to thereby roughen the box contact surface 500. By this means, the surface roughness of the box contact surface 500 can be increased.

### [Blasting treatment]

The blasting treatment is a treatment in which, for example, a blasting apparatus is used to cause a blast material (an abrasive) to collide against the box contact surface 500. The blasting treatment is, for example, a sand blasting treatment. The sand blasting treatment is a treatment in which a blast material (an abrasive) is mixed with compressed air and the mixture is propelled onto the box contact surface 500. Examples of the blast material include spherical shot material and angular grit material. The surface roughness of the box contact surface 500 can be increased by the sand blasting treatment. The sand blasting treatment can be carried out by a well-known method. For example, air is compressed by a compressor, and the blast material is mixed with the compressed air. The blast material may be composed of, for example, stainless steel, aluminum, ceramic material, and alumina. The sand blasting treatment conditions such as the propelling speed can be set appropriately.

### [Anti-rust grease application process]

In the anti-rust grease application process the anti-rust grease 80A is applied onto the pin contact surface 400 of the hollow shell with a threaded connection that was prepared in the hollow shell preparation process.

The anti-rust grease application process is not particularly limited as long as the anti-rust grease 80A can be applied onto the pin contact surface 400. For example, the anti-rust grease 80A may be applied by spray coating, may be applied by brushing, or the anti-rust grease 80A may be applied onto the pin contact surface 400 by another well-known method.

### [Chemical treatment coating formation process]

In a case where the pin 40A of the oil well steel pipe with a threaded connection 200 includes the chemical treatment coating 90 between the pin contact surface 400 and the anti-rust grease 80A, a chemical treatment coating formation process may be performed at a timing that is after the preparation process and before the anti-rust grease application process. In other words, the chemical treatment coating formation process is an optional process. In a case where the oil well steel pipe with a threaded connection 200 does not include the chemical treatment coating 90, the chemical treatment coating formation process is not performed.

In the case of performing the chemical treatment coating formation process, a well-known chemical treatment is performed in the chemical treatment coating formation process to thereby form the chemical treatment coating 90 on the pin contact surface 400. The chemical treatment can be carried out by a well-known method. A common chemical treatment solution that is commercially available can be used as the treatment solution. To facilitate the formation of the chemical treatment coating, surface modification may be performed prior to the chemical treatment. The term "surface modification" refers to a treatment that includes immersion in an aqueous solution for surface modification that contains colloidal titanium or the like. After the chemical treatment, it is preferable that rinsing with water or with warm water is carried out before drying.

The oil well steel pipe with a threaded connection 200 can be produced by the above described production process. Note that, the oil well steel pipe with a threaded connection 200 may also be prepared by another method which is different from the method described above.

### [Protector mounting process]

Preferably, a protector mounting process is performed to mount a protector to the pin 40A and/or the box 50 of the oil well steel pipe with a threaded connection 200. A protector may be mounted, or need not be mounted. In the case of mounting a protector, a protector that is mounted to the pin 40A (hereunder, referred to as "protector for a pin") is a cap which covers the pin contact surface 400 of the pin 40A. A protector that is mounted on the box 50 (hereunder, referred to as "protector for a box") is a cover that covers the box contact surface 500 of the box 50.

The protector for a box is a cylindrical shape, and an external thread part which can be threaded into the internal thread part 51 of the box 50 is formed on the outer peripheral surface. The protector for a box is composed of, for example, a well-known resin.

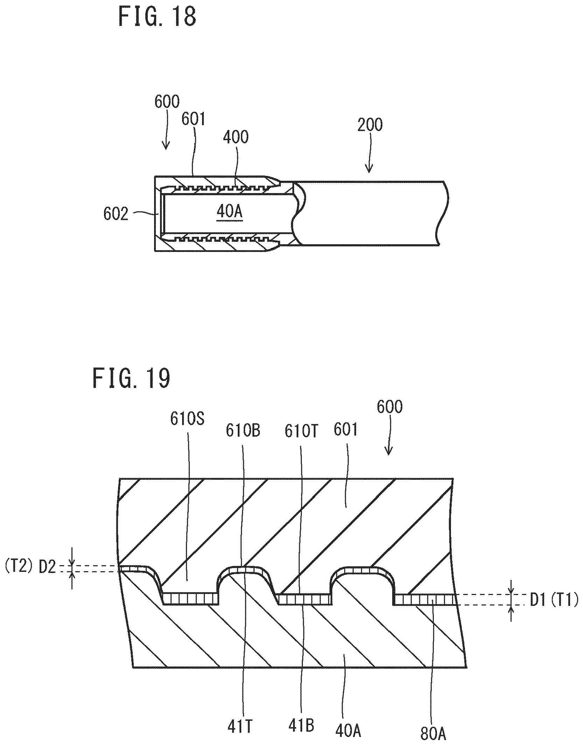

FIG. 18 is a configuration diagram illustrating a state in which a protector for a pin is mounted on the pin 40A. Referring to FIG. 18, a protector for a pin 600 is capped over and fastened to the pin 40A. The protector for a pin 600 includes a tubular part 601 and a cap part 602. In the tubular part 601, an internal thread part is formed on the inner peripheral surface. The internal thread part faces the pin contact surface 400. The internal thread part of the tubular part 601 corresponds with the external thread part 41 of the pin contact surface 400. When the pin 40A is inserted into the protector for a pin 600, the internal thread part of the tubular part 601 engages with the external thread part of the pin contact surface 400. By this means, the protector for a pin 600 is fastened to the pin 40A. At such time, the tubular part 601 covers the pin contact surface 400.

FIG. 19 is a longitudinal section illustrating a portion in the vicinity of the external thread part 41 and an internal thread part 610 of the protector for a pin 600 in a state in which the protector for a pin 600 is mounted on the pin 40A. Referring to FIG. 19, in the state in which the protector for a pin 600 is mounted, a distance between a thread root 41B of the external thread part 41 of the pin 40A and a thread ridge 610T of the internal thread part 610 of the tubular part 601 of the protector for a pin 600 is defined as "D1". Further, a distance between a thread root 610B of the internal thread part 610 of the tubular part 601 of the protector for a pin 600 and a thread ridge 41T of the external thread part 41 of the pin 40A is defined as D2. In this case, the distance D1 is longer than the distance D2.

In a state in which the protector for a pin 600 is mounted on the pin 40A, the anti-rust grease 80A that has been applied onto the pin contact surface 400 is filled into the gap between the internal thread part 610 of the protector for a pin 600 and the external thread part 41 of the pin 40A. Accordingly, a thickness T 1 of the anti-rust grease 80A between the thread root 41B of the external thread part 41 of the pin 40A and the thread ridge 610T of the internal thread part 610 of the tubular part 601 of the protector for a pin 600 is thicker than a thickness T2 of the anti-rust grease 80A between the thread ridge 41T of the external thread part 41 of the pin 40A and the thread root 610B of the internal thread part of the tubular part 601 of the protector for a pin 600.

At the oil well drilling site A3, when the pin 40 of the oil well steel pipe with a threaded connection 1 is inserted into and fastened to the box 50 of another oil well steel pipe with a threaded connection 1, the thread root 41B of the external thread part 41 of the pin 40 of the oil well steel pipe with a threaded connection 1 contacts the thread ridge of the internal thread part 51 of the box 50 of the other oil well steel pipe with a threaded connection 1. On the other hand, during fastening, a slight gap is formed between the thread ridge 41T of the external thread part 41 of the pin 40 of the oil well steel pipe with a threaded connection 1 and the thread root of the internal thread part 51 of the box 50 of the other oil well steel pipe with a threaded connection 1. Therefore, in the oil well steel pipe with a threaded connection 200, in a state in which the protector for a pin is mounted, the anti-rust grease 80A is thickly formed in the thread root 41B region. In this case, the occurrence of rust in the thread root 41B region of the external thread part 41 of the pin 40A that contacts with the internal thread of the box during fastening can be further suppressed.

### [Local yard delivery process: S2]

The oil well steel pipe with a threaded connection 200 prepared in the oil well steel pipe with a threaded connection preparation process S1 is delivered to the local yard A2 by a land route or a sea route. It suffices to employ a well-known method as the delivery method. When delivering by a land route, a plurality of the oil well steel pipes with a threaded connection 200 are delivered by a large-size vehicle such as a truck. When delivering by a sea route, a plurality of the oil well steel pipes with a threaded connection 200 are loaded onto a ship and delivered.

### [Local yard temporary storage process: S3]

In the local yard temporary storage process S3, the plurality of oil well steel pipes with a threaded connections 200 that were transported to the local yard A2 are temporarily stored at the local yard A2. The storage period of the oil well steel pipe with a threaded connection 200 at the local yard A2 is longer than the storage period of the oil well steel pipe with a threaded connection 1 at the oil well drilling site A3. The storage period of the oil well steel pipe with a threaded connection 200 at the local yard A2 is, for example, about six months to two years.

In the local yard delivery process S2, a plurality of the oil well steel pipes with a threaded connection 200 are delivered. Therefore, in some cases, during delivery, the pins 40A of some of the oil well steel pipes with a threaded connection 200 bump against each other, or the pin 40A of an oil well steel pipe with a threaded connection 200 bumps against a structure other than an oil well steel pipe with a threaded connection 200 or the like. In some cases, a part of the anti-rust grease 80A formed on the pin contact surface 400 is removed as the result of such bumping that occurs during delivery. However, as mentioned above, the anti-rust grease 80A can be easily restored by applying the anti-rust grease 80A onto the pin contact surface 400. Therefore, even if a case arises in which a part of the anti-rust grease 80A is removed during delivery, the anti-rust grease 80A can be easily restored by applying the anti-rust grease 80A onto the pin contact surface 400 at the local yard A2, and hence excellent repairability is obtained. Therefore, unlike a case of forming a solid anti-rust coating, it is not necessary to provide dedicated equipment at the local yard A2.

Further, during delivery, there are also cases where the external thread part 41, the pin sealing surface 42 or the pin shoulder surface 43 on the pin contact surface 400 is damaged or fractured due to bumping. In such a case, at the local yard A2, the damaged pin 40A of the oil well steel pipe with a threaded connection 200 is cut off. Further, a pin contact surface manufacturing apparatus provided at the local yard A2 is then used to perform threading with respect to the end portion of the oil well steel pipe with a threaded connection 200 from which the pin 40A was cut off, to thereby newly form the pin contact surface 400. In addition, the anti-rust grease 80A is applied onto the pin contact surface 400 that was newly formed. Thus, the anti-rust grease 80A can be easily restored, and excellent repairability is obtained.

At the local yard A2, the oil well steel pipe with a threaded connection 200 is stored outdoors for a long time period of from around six months to two years. However, as mentioned above, the anti-rust grease 80A exhibits excellent corrosion resistance. Therefore, during storage at the local yard A2, the occurrence of rust on the pin contact surface 400 can be inhibited. Note that, the solid lubricant coating 60 is formed on the box contact surface 500 of the oil well steel pipe with a threaded connection 200. The solid lubricant coating 60 also exhibits an anti-rust action. Therefore, during storage at the local yard A2, the occurrence of rust on the box contact surface 500 can also be inhibited.

### [Light oil application process: S4]

At the oil well drilling site A3, when the number of oil well steel pipes with a threaded connection 1 that are stored decreases, oil well steel pipes with a threaded connection 1 are newly supplied to the oil well drilling site A3 from the local yard A2. Before delivering an oil well steel pipe with a threaded connection 1 from the local yard A2 to the oil well drilling site A3, at the local yard A2, the anti-rust grease 80A is removed from the oil well steel pipe with a threaded connection 200 and the light oil 80 is then applied to thereby produce the oil well steel pipe with a threaded connection 1.

Specifically, firstly, at the local yard A2 the anti-rust grease 80A on the pin contact surface 400 of the oil well steel pipe with a threaded connection 200 is removed. Since the anti-rust grease 80A is in a semi-solid state or a paste state, the anti-rust grease 80A can be easily removed. For example, the anti-rust grease 80A can be removed by using high-pressure water. The light oil 80 is applied onto the pin contact surface 400 from which the anti-rust grease 80A was removed. Since the light oil 80 is a liquid, the light oil 80 can be easily applied onto the pin contact surface 400. The light oil 80 may be applied by spray coating, may be applied by brushing, or may be applied onto the pin contact surface 400 by another well-known method.

At the local yard A2, the anti-rust grease 80A can be easily replaced with the light oil 80 by the process described above. By this means, the occurrence of clogging inside the oil well steel pipes (oil well steel pipes connected body) after fastening that is caused by an anti-rust agent can be suppressed. In addition, as described later, the oil well steel pipe with a threaded connection 1 in which the light oil 80 is applied can lower the shouldering torque Ts.

### [Oil well drilling site delivery process: S5]

In the oil well drilling site delivery process S5, the oil well steel pipe with a threaded connection 1 produced at the local yard A2 is delivered from the local yard A2 to the oil well drilling site A3. It suffices to employ a well-known method as the delivery method. When delivering by a land route, a plurality of the oil well steel pipes with a threaded connection 1 are delivered by a large-size vehicle such as a truck. When delivering by a sea route, a plurality of the oil well steel pipes with a threaded connection 1 are loaded onto a ship and delivered.

### [Oil well drilling site temporary storage process: S6]

In the oil well drilling site temporary storage process S6, the oil well steel pipe with a threaded connection 1 that was delivered from the local yard A2 is temporarily stored. The storage period of the oil well steel pipes with a threaded connection 1 at the oil well drilling site A3 is markedly shorter than the storage period of the oil well steel pipe with a threaded connection 200 at the local yard A2. The storage period of the oil well steel pipe with a threaded connection 1 at the oil well drilling site A3 is, for example, one week to one month.

The storage period of the oil well steel pipe with a threaded connection 1 at the oil well drilling site A3 is a short period as mentioned above. Therefore, adequate corrosion resistance is obtained by the light oil 80 applied on the pin contact surface 400.

Note that, in the oil well drilling site delivery process S5, there are also cases where the external thread part 41, the pin sealing surface 42 or the pin shoulder surface 43 on the pin contact surface 400 is damaged or fractured due to bumping during delivery from the local yard A2 to the oil well drilling site A3. In such a case, the damaged oil well steel pipe with a threaded connection 1 is returned to the local yard A2 from the oil well drilling site A3. At the local yard A2, the damaged pin 40A of the oil well steel pipe with a threaded connection 1 is cut off, and threading is then performed to newly form a pin contact surface 400. In addition, the light oil 80 is applied onto the pin contact surface 400 that was newly formed. By this means, an oil well steel pipe with a threaded connection 1 in which the light oil 80 is applied can be easily restored.

### [Oil well steel pipes connected body production process: S7]

An oil well steel pipes connected body is produced using the oil well steel pipe with a threaded connection 1 that is temporarily stored at the oil well drilling site A3 (S7). Specifically, the pin 40 of the oil well steel pipe with a threaded connection 1 is inserted in and screwed into the box 50 of another oil well steel pipe with a threaded connection 1. At such time, the light oil 80 on the pin contact surface 400 reduces the shouldering torque Ts.

By the production process described above, oil well steel pipes connected body that is formed by fastening together a plurality of oil well steel pipes with a threaded connection 1 can be produced at the oil well drilling site A3. In the present production method, a solid anti-rust coating is not formed on the pin contact surface 400, and instead, the anti-rust grease 80A is applied onto the pin contact surface 400 until immediately before use. By this means, even in a case where the pin 40A is damaged, the pin 40A can be newly manufactured and the anti-rust grease 80A can also be easily applied (restored), and thus excellent repairability is obtained. In addition, the anti-rust grease 80A exhibits a rust prevention function for a long time period. Therefore, during storage at the local yard A2, the occurrence of rust on the pin contact surface of the oil well steel pipe with a threaded connection 200 can be inhibited. Then, before delivery from the local yard A2 to the oil well drilling site A3, the anti-rust grease 80A is removed, and the light oil 80 is applied onto the pin contact surface 400. By this means, the occurrence of clogging inside the oil well steel pipes (oil well steel pipes connected body) after fastening that is caused by an anti-rust agent can be suppressed. In addition, by producing oil well steel pipes connected body using the oil well steel pipe with a threaded connection 1 in which the light oil 80 is applied on the pin contact surface 400, the shouldering torque Ts can be kept to a low level when the oil well steel pipe with a threaded connection 1 is screwed into and fastened to another oil well steel pipe with a threaded connection 1. Note that, the fastening torque To can be maintained at a high level. In addition, excellent galling resistance is exhibited by the solid lubricant coating that is formed on the box 50.

### EXAMPLES

Examples are described hereunder. However, the oil well steel pipe with a threaded connection of the present embodiment is not limited by the Examples. The symbol "%" used in the Examples means "mass%", unless specifically stated otherwise.

### [Manufacture of oil well steel pipes with a threaded connection of Test Numbers 1 to 3]

Oil well steel pipes with a threaded connection of Test Numbers 1 to 3 were prepared. A T&C type threaded connection for oil well steel pipes "VAM21 (registered trademark) KW" (external diameter: 250.83 mm (9.875 inches), wall thickness: 15.88 mm (0.625 inches)) produced by Nippon Steel Corporation was used as the oil well steel pipe with a threaded connection. The steel grade of the oil well steel pipe was a carbon steel, and the oil well steel pipe corresponded to P110 defined in the API 5CT standard, in which the content of C was 0.2% and the content of Cr was 1.0%.

### [Regarding pin contact surface of Test Numbers 1 and 2]

A zinc phosphate chemical treatment coating was formed on the pin contact surface of Test Numbers 1 and 2. Specifically, firstly, the pin contact surface was subjected to finishing by machine grinding. Thereafter, the pin contact surface was subjected to a chemical treatment by a well-known method using a commercially available zinc phosphate treatment liquid to form a zinc phosphate chemical treatment coating.

To simulate the method for producing oil well steel pipes connected body, first, an anti-rust grease was applied onto the zinc phosphate chemical treatment coating of Test Numbers 1 and 2. Specifically, a product with the trade name "RUST VETO AS EU" was applied onto the zinc phosphate chemical treatment coating of Test Numbers 1 and 2. After two hours elapsed after applying the anti-rust grease, the anti-rust grease was removed by high-pressure water. At such time, the zinc phosphate chemical treatment coating remained on the pin contact surface of Test Numbers 1 and 2.

After removing the anti-rust grease, a light oil was applied onto the zinc phosphate chemical treatment coating. Specifically, a light oil with the trade name "WD-40" was applied onto the zinc phosphate chemical treatment coating of Test Numbers 1 and 2. The WD-40 was spray coated onto the pin contact surface from a position at a distance of 500 mm therefrom. During the spray coating, the pin was rotated about its central axis so that the WD-40 was applied to the entire pin contact surface. The oil well steel pipes with a threaded connection of Test Numbers 1 and 2 were produced by the above process.

### [Regarding pin contact surface of Test Number 3]

A zinc phosphate chemical treatment coating was formed on the pin contact surface of Test Number 3 in a similar manner as for Test Numbers 1 and 2. The conditions for producing the zinc phosphate chemical treatment coating were the same as for Test Numbers 1 and 2.

A solid anti-rust coating was formed on the zinc phosphate chemical treatment coating. The composition for solid anti-rust coating formation included an acrylic resin-based UV-curable resin as a main component. The applied composition for solid anti-rust coating formation was subjected to irradiation with ultraviolet light using well-known conditions, and a solid anti-rust coating having a thickness of approximately 20 µm was formed. The obtained solid anti-rust coating was transparent.

### [Regarding box contact surface of Test Numbers 1 to 3]

A Cu-Sn-Zn alloy plating layer having a thickness of approximately 8 µm was formed by a well-known electroplating process on the box contact surface of Test Numbers 1 to 3. The chemical composition of the Cu-Sn-Zn alloy plating layer was Cu: approximately 63%, Sn: approximately 30%, and Zn: approximately 7%.

A composition containing, in mass%: a binder (including a mixture of a resin and paraffin wax (mass ratio of approximately 4:3) as a main component): approximately 70%, a lubricant (earthy graphite, PTFE or the like): approximately 20%, an anti-rust addition agent: approximately 7%, and a plasticizer: approximately 1%, was heated to 130°C and applied by spray coating onto the Cu-Sn-Zn alloy plating layer and then cooled, to thereby form a solid lubricant coating having a thickness of 50 µm.

A plurality of oil well steel pipes with a threaded connection of Test Numbers 1 to 3 were produced by the above-described production processes.

### [Torque measurement test]

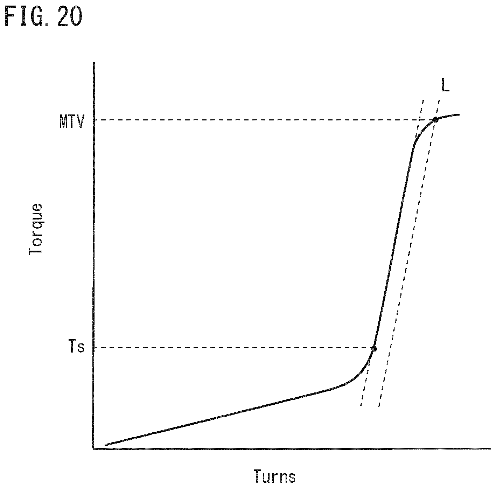

The torque at the time of fastening (during the process of thread fastening) using the oil well steel pipes with a threaded connection of the respective test numbers was measured, and a torque chart illustrated in FIG. 20 was prepared. Specifically, the fastening torque value was gradually increased at a fastening speed of 10 rpm, and the test was ended at a point when the material yielded. Reference characters "Ts" in FIG. 20 denote the shouldering torque. Reference characters MTV in FIG. 20 denote a torque value at which a line segment L and the torque chart intersect. The line segment L is a straight line that has the same slope as the slope of a linear region of the torque chart after shouldering, and for which the number of turns is 0.2% more in comparison to the aforementioned linear region. In the present example, the yield torque Ty (boundary between the linear region and a nonlinear region in the torque chart after shouldering) was indistinct, and therefore MTV was defined using the line segment L, and MTV was adopted as an index in place of the yield torque Ty. A graph relating to the torque value of the respective Test Numbers 1 to 3 is illustrated in FIG. 2. In FIG. 2, the shouldering torque of Test Number 3 is taken as 100, and the shouldering torque and torque on shoulder resistance ΔT of each test number are shown. In the bar graphs for each test number in FIG. 2, the top end of a hatched portion indicates the shouldering torque Ts, and the top end of an outline portion indicates the MTV value.

### [Galling resistance evaluation test]

Evaluation of the galling resistance was performed by means of a repeated fastening test. Fastening and loosening were repeated at room temperature (20°C) using the pin and box of Test Number 1 and Test Number 3, and the galling resistance was evaluated. The fastening torque was set to 24350 ft. lbs. Each time one cycle of fastening and loosening was completed, the pin contact surface and the box contact surface were visually observed. The state of occurrence of galling on thread parts and metal seal parts was examined by visual inspection. With respect to the metal seal parts, the test was ended upon the occurrence of galling. When the galling on a thread part was minor and was repairable by repairing by filing or the like, the galling flaws were corrected and the test was continued. The maximum number of times for repeating fastening was set as 5 times. If neither unrepairable galling at a thread part nor galling at a metal seal part had occurred after fastening was repeated the maximum number of times, it was determined that the test specimen had passed the test (indicated by "E" (excellent) in Table 1).

### [Outdoor exposure test]

A protector having the same shape as the pin of the oil well steel pipe with a threaded connection of Test Numbers 1 to 3 was mounted on the pin, and the oil well steel pipes with a threaded connection were left to stand outdoors for six weeks. After being left to stand for six weeks, whether or not rust had occurred on the pin contact surface of each test number was confirmed by visual observation. If the occurrence of rust could not be confirmed, it was determined that the test specimen had passed the test (indicated by "E" (excellent) in Table 1).

### [Evaluation results]

The test results are shown in FIG. 2 and Table 1.

### [Table 1]

**TABLE1**

| **Test No.** | **Galling Resistance Evaluation Test** | **Outdoor Exposure Test** |
|---|---|---|
| 1 | E | E |
| 2 | E | E |
| 3 | E | E |

Referring to FIG. 2, in the case of the oil well steel pipe with a threaded connection of Test Number 1 and Test Number 2, the shouldering torque Ts decreased in comparison to the conventional oil well steel pipe with a threaded connection of Test Number 3. In addition, the MTV of Test Numbers 1 and 2 was about equal to the MTV of Test Number 3.

Further, referring to Table 1, the oil well steel pipes with a threaded connection of Test Numbers 1 to 3 were all excellent in galling resistance. In addition, in the outdoor exposure test also, the occurrence of rust was not observed in any of the oil well steel pipes with a threaded connection of Test Numbers 1 to 3, and the oil well steel pipes with a threaded connection of Test Numbers 1 to 3 were all excellent in corrosion resistance.

An embodiment of the present invention has been described above. However, the foregoing embodiment is merely an example for implementing the present invention. Accordingly, the present invention is not limited to the above embodiment, and the above embodiment can be appropriately modified and implemented within a range which does not depart from the gist of the present invention.

### REFERENCE SIGNS LIST

- 1: Oil well steel pipe with a threaded connection
- 10: Pipe main body
- 10A: First end portion
- 10B: Second end portion
- 11: Pin tube body
- 12: Coupling
- 40, 40A: Pin
- 41: External thread part
- 42: Pin sealing surface
- 43: Pin shoulder surface
- 50: Box
- 51: Internal thread part
- 52: Box sealing surface
- 53: Box shoulder surface
- 60: Solid lubricant coating
- 80: Light oil
- 200: Oil well steel pipe with a threaded connection
- 400: Pin contact surface
- 500: Box contact surface

## Claims

1. An oil well steel pipe with a threaded connection that is fastenable to another oil well steel pipe with a threaded connection, comprising:
a pipe main body including a first end portion and a second end portion,
wherein:
the pipe main body includes:
a pin formed at the first end portion, wherein, during fastening, the pin is inserted into a box of the other oil well steel pipe with a threaded connection and is fastened to the box of the other oil well steel pipe with a threaded connection, and
a box formed at the second end portion, wherein, during the fastening, a pin of the other oil well steel pipe with a threaded connection is inserted into the box, and the box is fastened to the pin of the other oil well steel pipe with a threaded connection;
the pin includes:
a pin contact surface which at least includes an external thread part formed on an outer peripheral surface of the first end portion of the pipe main body and which, during the fastening, contacts the box of the other oil well steel pipe with a threaded connection;
a light oil is applied to the pin contact surface; and
the box includes:
a box contact surface which at least includes an internal thread part formed on an inner peripheral surface of the second end portion of the pipe main body and which, during the fastening, contacts the pin contact surface of the pin of the other oil well steel pipe with a threaded connection, and
a solid lubricant coating formed on or over the box contact surface.

2. The oil well steel pipe with a threaded connection according to claim 1, wherein:
the pin contact surface further includes:
a pin sealing surface that is formed further on a front end side than the external thread part on the outer peripheral surface of the first end portion, and
a pin shoulder surface provided at a front end of the first end portion; and
the box contact surface further includes:
a box sealing surface that is formed further on a front end side than the internal thread part on the inner peripheral surface of the first end portion, and
a box shoulder surface provided at a front end of the second end portion.

3. The oil well steel pipe with a threaded connection according to claim 1 or claim 2, wherein:
the pin further includes:
a chemical treatment coating formed on the pin contact surface; and
the light oil is applied onto the chemical treatment coating.

4. The oil well steel pipe with a threaded connection according to claim 3, wherein:
in a chemical composition of the oil well steel pipe with a threaded connection, a content of Cr is, in mass%, 2.0% or less.

5. The oil well steel pipe with a threaded connection according to any one of claim 1 to claim 4, wherein:
the box further includes:
a plating coating formed on the box contact surface; and
the solid lubricant coating is formed on the plating coating.

6. An oil well steel pipe with a threaded connection, comprising:
a pipe main body including a first end portion and a second end portion,
wherein:
the pipe main body includes:
a pin formed at the first end portion, and
a box formed at the second end portion;
the pin includes:
a pin contact surface which at least includes an external thread part formed on an outer peripheral surface of the first end portion of the pipe main body;
an anti-rust grease is applied to the pin contact surface; and
the box includes:
a box contact surface which at least includes an internal thread part formed on an inner peripheral surface of the second end portion of the pipe main body, and
a solid lubricant coating formed on or over the box contact surface.

7. The oil well steel pipe with a threaded connection according to claim 6, wherein:
the pin contact surface further includes:
a pin sealing surface that is formed further on a front end side than the external thread part on the outer peripheral surface of the first end portion, and
a pin shoulder surface provided at a front end of the first end portion; and
the box contact surface further includes:
a box sealing surface that is formed further on a front end side than the internal thread part on the inner peripheral surface of the first end portion, and
a box shoulder surface provided at a front end of the second end portion.

8. The oil well steel pipe with a threaded connection according to claim 6 or claim 7, wherein:
the pin further includes:
a chemical treatment coating formed on the pin contact surface; and
the anti-rust grease is applied onto the chemical treatment coating.

9. The oil well steel pipe with a threaded connection according to claim 8, wherein:
in a chemical composition of the oil well steel pipe with a threaded connection, a content of Cr is, in mass%, 2.0% or less.

10. The oil well steel pipe with a threaded connection according to any one of claim 6 to claim 9, wherein:
the box further includes:
a plating coating formed on the box contact surface; and
the solid lubricant coating is formed on the plating coating.

11. The oil well steel pipe with a threaded connection according to any one of claim 6 to claim 10, further comprising:
a protector that is capped over and fastened to the pin;
wherein:
the protector includes:
a tubular part in which an internal thread is formed on an inner peripheral surface, and
a cap part disposed at one end of the tubular part;
a distance D1 between a thread ridge of the external thread of the pin and a thread root of the internal thread of the tubular part of the protector is longer than a distance D2 between a thread root of the external thread of the pin and a thread ridge of the internal thread of the tubular part of the protector; and
a thickness T1 of the anti-rust grease between the thread ridge of the external thread of the pin and the thread root of the internal thread of the tubular part of the protector is thicker than a thickness T2 of the anti-rust grease between the thread root of the external thread of the pin and the thread ridge of the internal thread of the tubular part of the protector.

12. A method for producing oil well steel pipes connected body in which a plurality of oil well steel pipes with a threaded connection are fastened together, comprising:
an oil well steel pipe preparation process of preparing an oil well steel pipe with a threaded connection;
wherein:
the oil well steel pipe with a threaded connection comprises:
a pipe main body including a first end portion and a second end portion;
the pipe main body includes:
a pin formed at the first end portion, and
a box formed at the second end portion;
the pin includes:
a pin contact surface which at least has an external thread part formed on an outer peripheral surface of the first end portion of the pipe main body;
an anti-rust grease is applied to the pin contact surface; and
the box includes:
a box contact surface which at least includes an internal thread part formed on an inner peripheral surface of the second end portion of the pipe main body, and
a solid lubricant coating formed on or over the box contact surface;
the method for producing oil well steel pipes connected body further comprising:
a process of transporting the oil well steel pipe with a threaded connection to a local yard that is a place for temporarily storing the oil well steel pipe with a threaded connection,
a process of temporarily storing the oil well steel pipe with a threaded connection transported to the local yard, at the local yard,
a process of, before delivering the oil well steel pipe with a threaded connection that is temporarily stored at the local yard to an oil well drilling site at which the oil well steel pipes connected body is to be formed, removing the anti-rust grease applied to the pin contact surface of the oil well steel pipe with a threaded connection, and applying a light oil to the pin contact surface from which the anti-rust grease is removed,
a process of delivering the oil well steel pipe with a threaded connection having the light oil applied to the pin contact surface to the oil well drilling site, and
a process of, at the oil well drilling site, fastening the oil well steel pipe with a threaded connection having the light oil applied to the pin contact surface to another oil well steel pipe with a threaded connection to form oil well steel pipes connected body.

13. A method for producing an oil well steel pipe with a threaded connection, comprising:
a process of temporarily storing, at a local yard, an oil well steel pipe with a threaded connection delivered to the local yard,
wherein:
the oil well steel pipe with a threaded connection comprises:
a pipe main body including a first end portion and a second end portion;
the pipe main body includes:
a pin formed at the first end portion, and
a box formed at the second end portion;
the pin includes:
a pin contact surface which at least has an external thread part formed on an outer peripheral surface of the first end portion of the pipe main body;
an anti-rust grease is applied to the pin contact surface; and
the box includes:
a box contact surface which at least has an internal thread part formed on an inner peripheral surface of the second end portion of the pipe main body, and
a solid lubricant coating formed on the box contact surface;
the method for producing an oil well steel pipe with a threaded connection further comprising:
a process of, before delivering the oil well steel pipe with a threaded connection that is temporarily stored at the local yard to an oil well drilling site at which oil well steel pipes connected body is to be formed, removing the anti-rust grease applied to the pin contact surface of the oil well steel pipe with a threaded connection, and applying a light oil to the pin contact surface from which the anti-rust grease is removed.
